# EUROPEAN PATENT APPLICATION

(11) **EP 3 719 731 A1**
(43) Date of publication of application: **07.10.2020**
(21) Application number: 18882470.0
(22) Date of filing: 19.10.2018
(51) Int. Cl.: G06Q 20/38, G06Q 20/06, G06Q 20/34

(54) **INFORMATION PROCESSING DEVICE, INFORMATION PROCESSING SYSTEM, INFORMATION PROCESSING METHOD AND PROGRAM**

(30) Priority: 28.11.2017 JP 2017227460
(71) Applicant: Sony Corporation, Tokyo 108-0075 (JP)
(72) Inventor: NAKATSURU, Tsutomu, Tokyo 108-0075 (JP); SAKABA, Koji, Tokyo 108-0075 (JP); SUZUKI Yuki, Tokyo 108-0075 (JP); ISHIKO, Masatsugu, Tokyo 108-0075 (JP)
(74) Representative: D Young & Co LLP
(86) International application number: PCT/JP2018/038958
(87) International publication number: WO 2019/107000

(57) **Abstract**

To implement a configuration of preventing a fraud regarding a transaction log regarding a transaction between an IC card and a reader/writer. The IC card receives log configuration information necessary for generating a transaction log from the reader/writer, generates the transaction log using the received data, executes signature processing for the generated transaction log to generate a transaction log with card signature, and transmits the generated transaction log with card signature to the reader/writer. Moreover, the IC card generates a transaction log with chain signature obtained by performing a new signature using an IC card-side immediately preceding transaction corresponding card signature and a reader/writer-side immediately preceding transaction corresponding reader/writer signature as signature target data, and transmits the transaction log with chain signature to the management server.

## Description

### TECHNICAL FIELD

The present disclosure relates to an information processing apparatus, an information processing system, and an information processing method, and a program. More specifically, the present disclosure relates to an information processing apparatus, an information processing system, an information processing method, and a program for preventing fraud settlement and transaction using an IC card.

### BACKGROUND ART

In recent years, use of IC cards and portable terminals having an electronic money function such as a settlement function, a charge function, and a credit card function has been expanding.

By using an IC card or a portable terminal having such functions, settlement for shopping, eating and drinking, and the like can be easily performed without carrying cash.

In a case of performing a transaction or a settlement using an IC card or a portable terminal, it is typical to bring the IC card or the portable terminal close to a reader/writer (R/W) that is a settlement device and execute near field communication between the IC card or the portable terminal and the reader/writer (R/W) to perform authentication processing, and to perform processing on condition that the authentication is established.

The reader/writer (R/W) generates a log in which details of the transaction are recorded, and transmits the log to a management server. The management server stores the log information in a storage unit (database), and performs actual remittance processing between accounts and management on the basis of the log information.

Note that transaction processing using an IC card is described in, for example, Patent Document 1 (Japanese Patent Application Laid-Open No. 2017-126386) and the like.

However, for example, in a case where the reader/writer is taken over by a malicious third party in such a system, there is a possibility that fraud processing is performed by the reader/writer.

Specifically, for example, there is a possibility that a fraud of generating a fictitious transaction log having no actual transaction and transmitting the fictitious transaction log to the management server, or a fraud of not transmitting a transaction log to the management server even though a transaction has been actually performed is performed.

The management server receives a large number of logs via reader/writers provided in many shops and the like, and there is a problem that specification of a fraud log from the log information is difficult.

As one technique of solving this problem, there is a technique of causing the reader/writer to sign using a secure element connected to the reader/writer, for example.

Specifically, for example, the reader/writer signs an output command (balance update command or the like) from the reader/writer to the IC card, and transmits the signed command to the management server along with a transaction log.

However, there is a problem that the secure element needs to be mounted to the reader/writer side in order to execute the processing.

Furthermore, even in a case of applying the above-described signature providing configuration, there is a problem that the fraud of the reader/writer not transmitting a log regarding an actually executed transaction to the management server cannot be prevented.

### CITATION LIST

### PATENT DOCUMENT

Patent Document 1: Japanese Patent Application Laid-Open No. 2017-126386

### SUMMARY OF THE INVENTION

### PROBLEMS TO BE SOLVED BY THE INVENTION

The present disclosure has been made in view of the above-described problems, for example, and an object is to provide an information processing apparatus, an information processing system, and an information processing method, and a program for preventing fraud settlement and transaction using an IC card.

### SOLUTIONS TO PROBLEMS

The first aspect of the present disclosure resides in
an information processing apparatus that is a first information processing apparatus configured to execute communication with a second information processing apparatus, the information processing apparatus including:
a control unit configured to execute communication with the second information processing apparatus to generate a transaction log, in which
the control unit
receives log configuration information necessary for generating the transaction log from the second information processing apparatus,
generates the transaction log, using received data, and
executes signature processing for the generated transaction log to generate a transaction log with card signature, and transmits the generated transaction log with card signature to the second information processing apparatus or a management server.

Moreover, the second aspect of the present disclosure resides in
an information processing system including: a first information processing apparatus and a second information processing apparatus, in which
the first information processing apparatus
receives log configuration information necessary for generating a transaction log from the second information processing apparatus,
generates the transaction log, using received data, and
executes signature processing for the generated transaction log to generate a transaction log with card signature, and transmits the generated transaction log with card signature to the second information processing apparatus, and
the second information processing apparatus
executes signature processing for transaction log data included in the transaction log with card signature received from the first information processing apparatus to generate a transaction log with card signature and reader/writer signature, and transmits the transaction log with card signature and reader/writer signature to a management server.

Moreover, the third aspect of the present disclosure resides in
an information processing apparatus that is a first information processing apparatus configured to execute communication with a second information processing apparatus, the information processing apparatus including:
a control unit configured to execute communication with the second information processing apparatus to generate a transaction log, in which
the control unit
receives log configuration information necessary for generating the transaction log from the second information processing apparatus,
generates the transaction log, using received data, and
executes new signature processing for data including the generated transaction log and signature data corresponding to an immediately preceding past transaction before the generation of the transaction log to generate a transaction log with chain signature, and transmits the generated transaction log with chain signature to the second information processing apparatus or a management server.

Moreover, the fourth aspect of the present disclosure resides in
an information processing system including: a first information processing apparatus and a second information processing apparatus, in which
the first information processing apparatus
receives log configuration information necessary for generating a transaction log and a second information processing apparatus-side immediately preceding transaction corresponding reader/writer signature from the second information processing apparatus, and
executes new card signature processing for following data (a) to (c):
(a) a transaction log generated using received data,
(b) a first information processing apparatus-side immediately preceding transaction corresponding card signature, and
(c) the second information processing apparatus-side immediately preceding transaction corresponding reader/writer signature,
and transmits a transaction log to which generated signature data is added to the second information processing apparatus, and
the second information processing apparatus
executes new reader/writer signature processing for the following data (a) to (c):
(a) the transaction log,
(b) the first information processing apparatus-side immediately preceding transaction corresponding card signature, and
(c) the second information processing apparatus-side immediately preceding transaction corresponding reader/writer signature
included in received data from the first information processing apparatus
to generate a transaction log with chain signature, and
transmits the generated transaction log with chain signature to a management server.

Moreover, the fifth aspect of the present disclosure resides in
an information processing method executed in a first information processing apparatus that executes communication with a second information processing apparatus,
the first information processing apparatus including
a control unit configured to execute the communication with the second information processing apparatus to generate a transaction log,
the information processing method including:
by the control unit,
receiving log configuration information necessary for generating the transaction log from the second information processing apparatus;
generating the transaction log, using received data; and
executing signature processing for the generated transaction log to generate a transaction log with card signature, and transmitting the generated transaction log with card signature to the reader/writer or a management server.

Moreover, the sixth aspect of the present disclosure resides in
an information processing method executed in a first information processing apparatus that executes communication with a second information processing apparatus,
the first information processing apparatus including
a control unit configured to execute communication with the second information processing apparatus to generate a transaction log,
the information processing method including:
by the control unit,
receiving log configuration information necessary for generating the transaction log from the second information processing apparatus;
generating the transaction log, using received data; and
executing new signature processing for data including the generated transaction log and signature data corresponding to an immediately preceding past transaction before the generation of the transaction log to generate a transaction log with chain signature, and transmitting the generated transaction log with chain signature to the second information processing apparatus or a management server.

Moreover, the seventh aspect of the present disclosure resides in
a program for causing a first information processing apparatus that executes communication with a second information processing apparatus to execute information processing,
the first information processing apparatus including
a control unit configured to execute the communication with the second information processing apparatus to generate a transaction log,
the program for causing the control unit to execute:
processing of receiving log configuration information necessary for generating the transaction log from the second information processing apparatus;
processing of generating the transaction log, using received data;
processing of executing signature processing for the generated transaction log to generate a transaction log with card signature; and
processing of transmitting the generated transaction log with card signature to the second information processing apparatus or a management server.

Moreover, the eighth aspect of the present disclosure resides in
a program for causing a first information processing apparatus that executes communication with a second information processing apparatus to execute information processing,
the first information processing apparatus including
a control unit configured to execute the communication with the second information processing apparatus to generate a transaction log,
the program for causing the control unit to execute:
processing of receiving log configuration information necessary for generating the transaction log from the second information processing apparatus;
processing of generating the transaction log, using received data;
processing of executing new signature processing for data including the generated transaction log and signature data corresponding to an immediately preceding past transaction before the generation of the transaction log to generate a transaction log with chain signature; and
processing of transmitting the generated transaction log with chain signature to the second information processing apparatus or a management server.

Note that the program according to the present disclosure is, for example, a program that can be provided by a storage medium or a communication medium provided in a computer readable format to an information processing apparatus or a computer system that can execute various program codes. By providing such a program in the computer readable format, processing according to the program is implemented on the information processing apparatus or the computer system.

Still other objects, features, and advantages of the present disclosure will become clear from more detailed description based on examples and attached drawings of the present disclosure to be described below. Note that a system in the present specification is a logical aggregate configuration of a plurality of devices, and is not limited to devices having respective configurations within the same housing.

### EFFECTS OF THE INVENTION

According to the configuration of one example of the present disclosure, a configuration of preventing a fraud regarding a transaction log regarding a transaction between an IC card and a reader/writer is implemented.

Specifically, for example, the IC card receives log configuration information necessary for generating a transaction log from the reader/writer, generates the transaction log using the received data, executes signature processing for the generated transaction log to generate a transaction log with card signature, and transmits the generated transaction log with card signature to the reader/writer. Moreover, the IC card generates a transaction log with chain signature obtained by performing a new signature using an IC card-side immediately preceding transaction corresponding card signature and a reader/writer-side immediately preceding transaction corresponding reader/writer signature as signature target data, and transmits the transaction log with chain signature to the management server.

With the present configuration, a configuration of preventing a fraud regarding a transaction log regarding a transaction between an IC card and a reader/writer is implemented.

Note that the effects described in the present specification are merely examples and are not limited, and additional effects may be exhibited.

### BRIEF DESCRIPTION OF DRAWINGS

Fig. 1 is a diagram for describing an outline of an information processing system.
Fig. 2 is a diagram illustrating a sequence example of processing executed in the information processing system.
Fig. 3 is a diagram for describing a data configuration example of a transaction log.
Fig. 4 is a diagram illustrating a sequence diagram for describing a processing sequence according to an example of the present disclosure.
Fig. 5 is a diagram illustrating a configuration example of a transaction log with card signature.
Fig. 6 is a diagram illustrating sequences of signature generation processing and signature verification processing according to a public key cryptographic system.
Fig. 7 is a diagram illustrating sequences of signature (MAC) generation processing and signature verification processing according to a common key cryptographic system.
Fig. 8 is a diagram illustrating examples of log information stored in a reader/writer (R/W) and an IC card.
Fig. 9 is a diagram illustrating a sequence diagram for describing a processing sequence according to an example of the present disclosure.
Fig. 10 is a diagram illustrating an example of history data of a transaction log with card signature.
Fig. 11 is a diagram for describing a data configuration example of a transaction log with card signature & reader/writer (RW) signature.
Fig. 12 is a diagram illustrating a sequence diagram for describing a processing sequence according to an example of the present disclosure.
Fig. 13 is a diagram illustrating a sequence diagram for describing a processing sequence according to an example of the present disclosure.
Fig. 14 is a diagram illustrating a sequence diagram for describing a processing sequence according to an example of the present disclosure.
Fig. 15 is a diagram for describing a data configuration example of a transaction log with chain signature.
Fig. 16 is a diagram for describing a transaction log with chain signature.
Fig. 17 is a diagram for describing a transaction log with chain signature.
Fig. 18 is a diagram for describing a transaction log with chain signature.
Fig. 19 is a diagram for describing a transaction log with chain signature.
Fig. 20 is a diagram for describing a transaction log with chain signature.
Fig. 21 is a diagram for describing a transaction log with chain signature.
Fig. 22 is a diagram for describing a transaction log with chain signature.
Fig. 23 is a diagram for describing a transaction log with chain signature.
Fig. 24 is a diagram illustrating a sequence diagram for describing a processing sequence according to an example of the present disclosure.
Fig. 25 is a diagram illustrating a sequence diagram for describing a processing sequence according to an example of the present disclosure.
Fig. 26 is a diagram for describing an example of a transaction log in which a problem occurs and a configuration example of a transaction log having a configuration that solves the problem.
Fig. 27 is a diagram illustrating a sequence diagram for describing a processing sequence according to an example of the present disclosure.
Fig. 28 is a diagram illustrating a sequence diagram for describing a processing sequence according to an example of the present disclosure.
Fig. 29 is a diagram for describing a configuration example of the information processing apparatus.
Fig. 30 is a diagram for describing a configuration example of the information processing apparatus.

### MODE FOR CARRYING OUT THE INVENTION

Hereinafter, an information processing apparatus, an information processing system, and an information processing method, and a program of the present disclosure will be described in detail with reference to the drawings. Note that the description will be given according to the following items.
1. Outline of use of IC card and transaction log transmission and reception configuration
2. (Example 1) Example of IC card generating transaction log and providing signature of IC card
3. (Example 2) Example of transmitting history data of transaction log to management server
4. (Example 3) Example of providing IC card signature and reader/writer (R/W) signature to generated transaction log of IC card
5. (Example 4) Example using transaction log with chain signature
6. (Example 5) Processing example in a case where a plurality of management systems to which signatures according to different cryptographic systems are applied coexists
7. Hardware configuration example of information processing apparatus
8. Conclusion of Configurations of Present Disclosure

### [1. Outline of use of IC card and transaction log transmission and reception configuration]

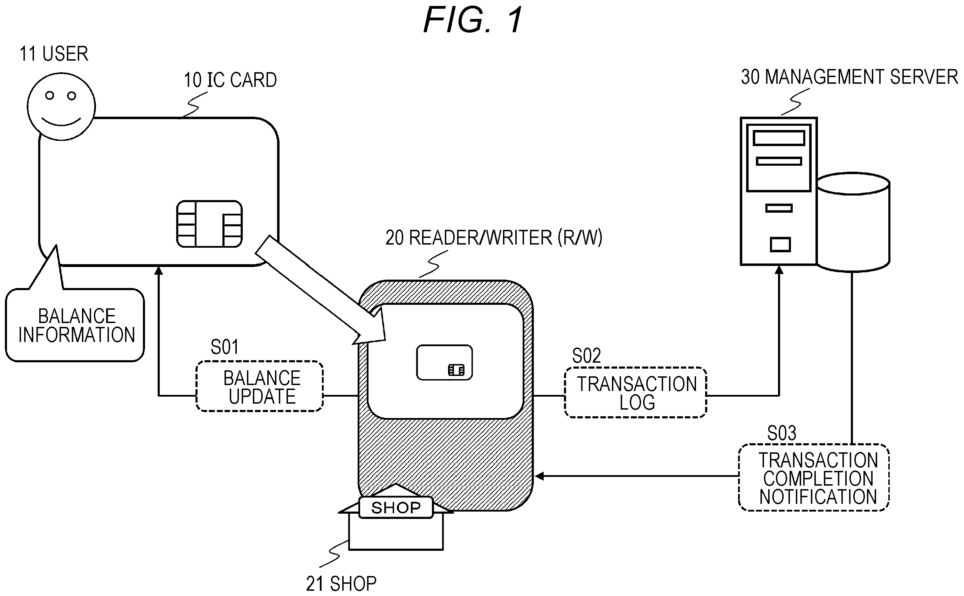

First, an outline of use of an IC card and a transaction log transmission and reception configuration will be described with reference to Fig. 1 and subsequent drawings.

Fig. 1 is a diagram illustrating a configuration example of an information processing system capable of executing processing of the present disclosure.

Fig. 1 illustrates configuration elements including:
an IC card 10 owned by a user 11,
a reader/writer (R/W) 20 provided in a shop 21, and
a management server 30 that manages settlement processing regarding a transaction using the IC card 10, and the like.

Note that Fig. 1 illustrates a configuration example of a card-type IC card as the IC card 10. However, a portable terminal such as a smartphone having an IC card function is also usable. In the examples to be described below, a card-type IC card will be described as a representative example. However, processing of the present disclosure is applicable not only to the card-type IC card but also to a portable terminal having an IC card function, for example.

The user 11 who owns the IC card 10 illustrated in Fig. 1 purchases a product in the shop 21, and brings the IC card 10 in contact with or close to the reader/writer (R/W) 20 provided in the shop 21.

Thereby, near field communication is performed between the IC card 10 and the reader/writer (R/W) 20. The IC card 10 and the reader/writer (R/W) 20 first perform authentication processing for confirming mutual validity, and perform processing regarding a settlement on condition that the authentication is established.

Specifically, in step S01 illustrated in Fig. 1, the reader/writer (R/W) 20 performs processing of updating a balance of the IC card 10. That is, the reader/writer (R/W) 20 performs processing of updating the balance of the IC card 10 with a value obtained by subtracting a price of a purchased product, processing of increasing the balance of the IC card 10 according to a charge amount requested by the user 11, or the like.

Note that the reader/writer (R/W) 20 is integrated with an accounting processing device that executes accounting processing such as settlement amount calculation and the like or connected with an accounting processing device having a different configuration, and acquires a balance update amount of the IC card 10 from the accounting processing device and performs the balance update processing for the IC card 10.

Next, in step S02, the reader/writer (R/W) 20 transmits a transaction log to the management server 30.

The transaction log includes, for example, data such as an identifier (ID) of the IC card 10 that has executed the transaction, an identifier of the shop 21 that is a transaction shop or the reader/writer (R/W) 20, transaction date and time, and a transaction amount.

When receiving the transaction log from the reader/writer (R/W) 20, the management server 30 stores the received transaction log in a database, and transmits a processing completion notification to the reader/writer 20 in step S03.

Note that the management server 30 performs actual settlement processing, for example, settlement processing of moving a transaction amount from an account of the owner user 11 of the IC card 10 to an account of the shop 21 or the like on the basis of transaction log information stored in the database. Alternatively, in some cases, the management server 30 notifies another settlement server of log information, and the settlement server performs the settlement processing.

The outline of the flow of the transaction using the IC card 10 has been described with reference to Fig. 1.

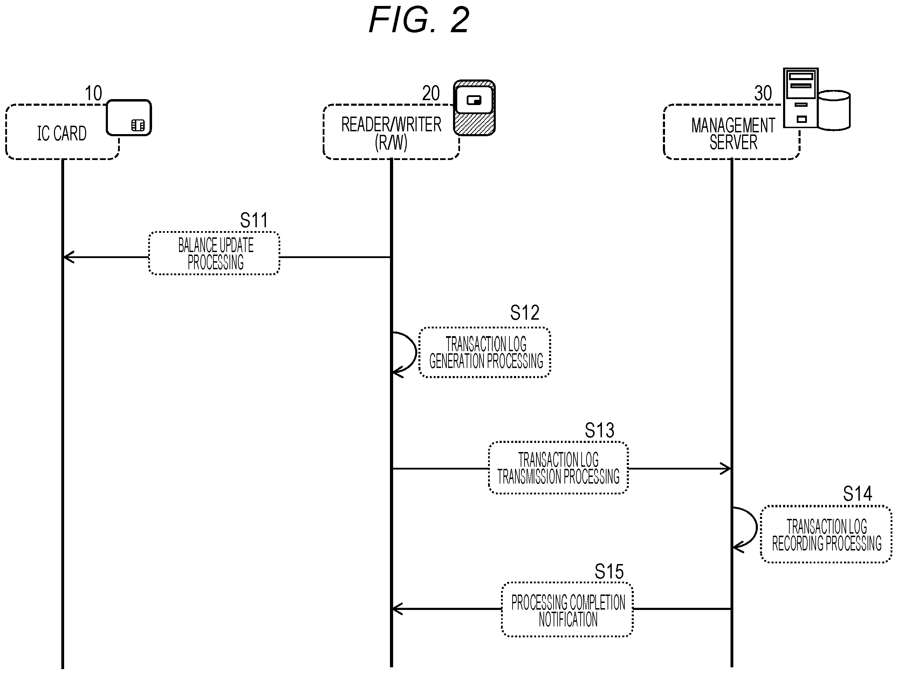

Fig. 2 is a sequence diagram illustrating the processing described with reference to Fig. 1 in a chronological order. The flow of the series of processing will be described again with reference to the sequence diagram illustrated in Fig. 2.

Fig. 2 illustrates the IC card 10, the reader/writer (R/W) 20, and the management server 30 from the left, and chronologically illustrates communication among the devices and processing executed by the devices.

Processing of steps illustrated in Fig. 2 will be sequentially described.

### (step S11)

First, in step S11, the reader/writer (R/W) 20 performs the processing of updating the balance of the IC card 10 according to the transaction amount.

Note that, in the balance update processing, the IC card 10 and the reader/writer (R/W) 20 perform the authentication processing for confirming mutual validity. The balance update processing is executed on condition that the authentication is established.

### (step S12)

Next, in step S12, the reader/writer (R/W) 20 generates the transaction log.

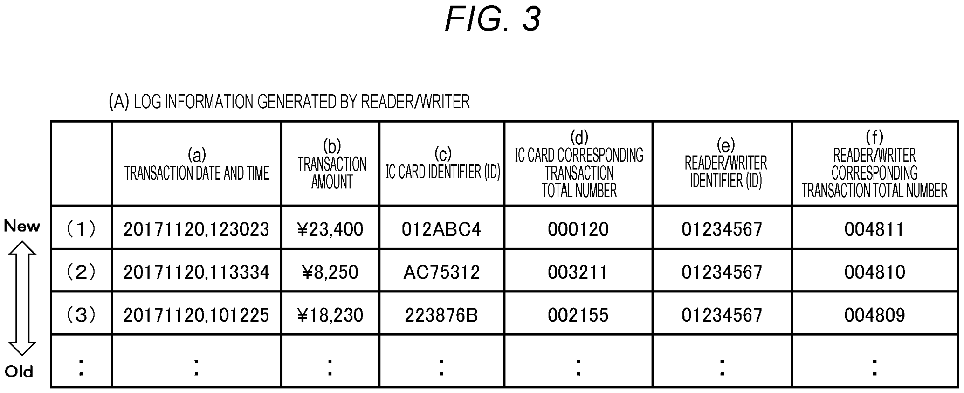

An example of the transaction log generated by the reader/writer (R/W) 20 will be described with reference to Fig. 3.

As illustrated in Fig. 3, the transaction log includes, for example, the following data:
(a) transaction date and time,
(b) a transaction amount,
(c) an identifier (ID) of the IC card 10 that has executed the transaction,
(d) a transaction total number of the IC card 10 that has executed the transaction,
(e) an identifier of the reader/writer (R/W) 20, and
(f) a transaction total number of the reader/writer (R/W) 20.

The reader/writer (R/W) 20 generates the transaction log including the data (a) to (f), for example.

A list of transaction logs illustrated in Fig. 3 is a list of logs generated on the basis of transactions executed by a certain reader/writer (R/W) 20, and the uppermost entry (1) in the list is the latest log. The list is a log list in which past logs are recorded in the list in descending order from the latest log.

The reader/writer (R/W) 20 stores such a log list in a storage unit (memory).

Note that "(d) a transaction total number of the IC card 10 that has executed the transaction" is a total number set to a series of processing performed by the IC card 10 using various reader/writers.

"(f) a transaction total number of the reader/writer (R/W) 20" is a total number set to a series of processing performed for various IC cards 10 by the reader/writer (R/W) 20.

Since the log list in Fig. 3 is a log list generated for transactions executed by one reader/writer (R/W) 20, "(e) an identifier of the reader/writer (R/W) 20" is the same in all the entries, and "(f) a transaction total number of the reader/writer (R/W) 20" is incremented by one in order of entries (3), (2), and (1) (004809 → 004810 → 004811).

Note that these pieces of information:
(c) an identifier (ID) of the IC card 10 that has executed the transaction, and
(d) a transaction total number of the IC card 10 that has executed the transaction
are received from the IC card 10 when the reader/writer (R/W) 20 generates a log and recorded as configuration data of the log.

### (step S13)

Next, in step S13, the reader/writer (R/W) 20 transmits the generated transaction log to the management server 30.

In a case where a transaction corresponding to the latest log (1) in the log list in Fig. 3 is executed, for example, the configuration data of the log (1) is transmitted to the management server 30.

### (step S14)

In step S14, when receiving the transaction log from the reader/writer (R/W) 20, the management server 30 stores the received transaction log in the database.

### (step S15)

In step S15, when database storage processing for the transaction log received from the reader/writer (R/W) 20 is completed, the management server 30 transmits a processing completion notification to the reader/writer 20.

According to the sequence, the transaction using the IC card 10, and the transmission of the transaction log from the reader/writer (R/W) 20 to the management server 30 are performed.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

If all the transaction information executed between the IC card 10 and the reader/writer (R/W) 20 is correctly recorded in the database of the management server 30, correct settlement processing will be executed without a problem.

However, as described above, for example, in a case where the reader/writer is taken over by a malicious third party, there is a possibility that fraud processing is performed by the reader/writer.

Specifically, for example, there is a possibility that processing of generating a fictitious transaction log having no actual transaction and transmitting the fictitious transaction log to the management server, or a fraud of not transmitting the transaction log to the management server although a transaction has been actually performed is performed.

The management server receives a large number of logs via reader/writers provided in many shops and the like, and there is a problem that specification of a fraud log from the log information is difficult.

Hereinafter, a configuration of the present disclosure that solves the problem will be described.

### [2. (Example 1) Example of IC card generating transaction log and providing signature of IC card]

First, an example in which an IC card generates a transaction log and provides a signature of the IC card will be described as Example 1.

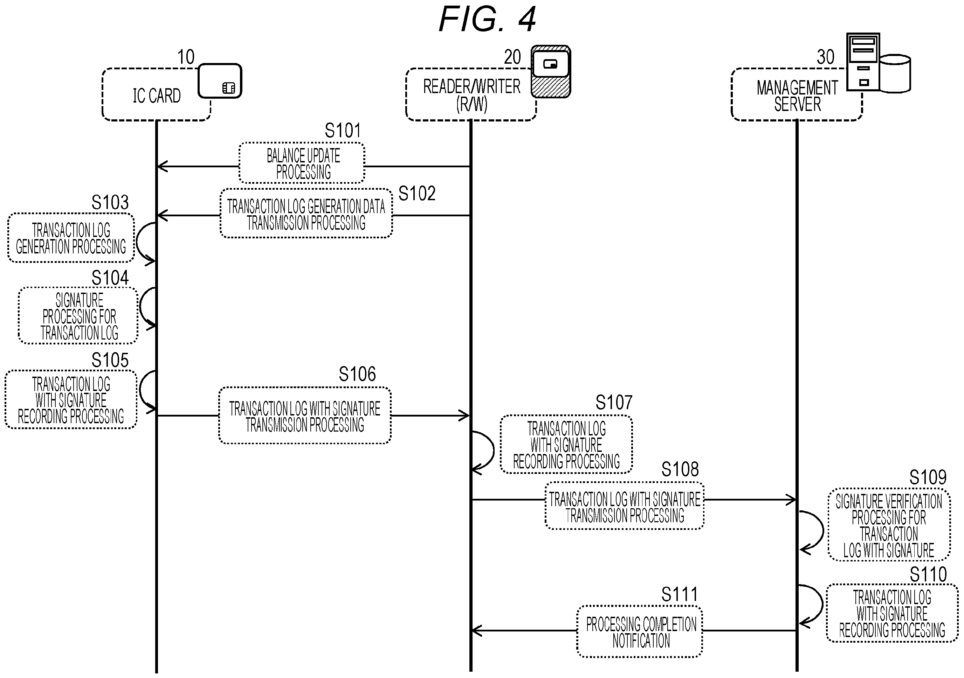

Fig. 4 illustrates a sequence diagram for describing a processing sequence according to the present example.

Fig. 4 illustrates the three configuration elements illustrated in Fig. 1, that is, the IC card 10, the reader/writer (R/W) 20, and the management server 30 from the left, and chronologically illustrates communication among the devices and processing executed by the devices, similarly to Fig. 2 described above.

Note that transmitted/received data among the devices is favorably encrypted data.

Processing of steps illustrated in Fig. 4 will be sequentially described.

### (step S101)

First, in step S101, the reader/writer (R/W) 20 performs processing of updating the balance of the IC card 10 according to the transaction amount.

Note that, in the balance update processing, the IC card 10 and the reader/writer (R/W) 20 perform the authentication processing for confirming mutual validity. The balance update processing is executed on condition that the authentication is established.

### (step S102)

Next, in step S102, the reader/writer (R/W) 20 transmits transaction log generation data to the IC card 10.

The transaction log includes, for example, the following data, as described with reference to Fig. 3 above:
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20.

Among the data (a) to (f), for example, these pieces of data:
(c) the identifier (ID) of the IC card 10 that has executed the transaction, and
(d) the transaction total number of the IC card 10 that has executed the transaction
are held by the IC card itself. The other data that are not held by the IC card 10 are received from the reader/writer (R/W) 20.

### (step S103)

Next, in step S103, the IC card 10 generates a transaction log.

The transaction log generated by the IC card 10 includes the following data, similar to the data configuration described with reference to Fig. 3 above:
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20.

### (step S104)

Next, in step S104, the IC card 10 provides a signature to the transaction log generated in step S103.

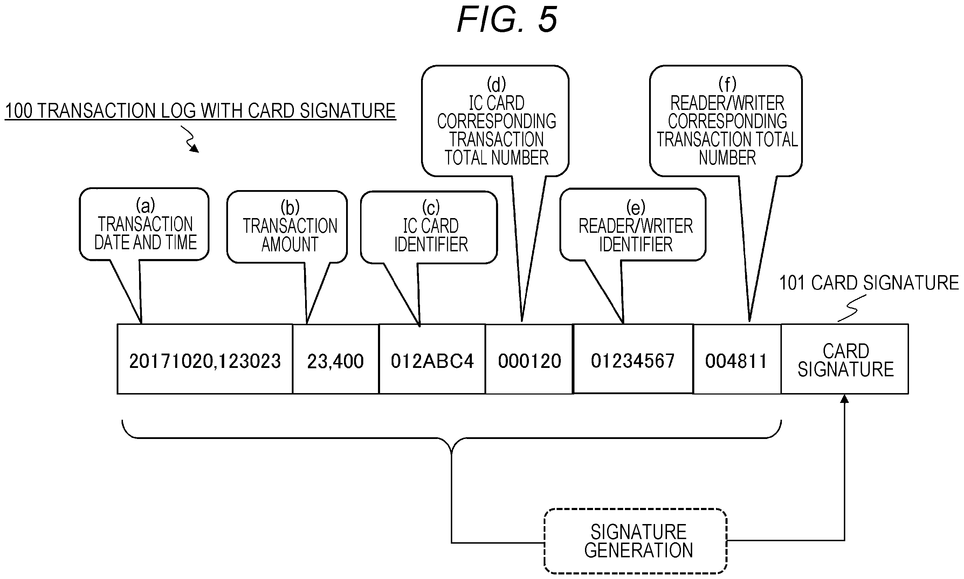

Fig. 5 illustrates a configuration example of a transaction log with card signature 100.

As illustrated in Fig. 5, the transaction log with card signature 100 has a configuration obtained by adding a card signature 101 generated using the following configuration data (a) to (f) as signature target data to a log:
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20, which are transaction log configuration data.

Note that the signature is, for example, a signature according to a public key cryptographic system or a signature according to a common key cryptographic system (message authentication code: MAC).

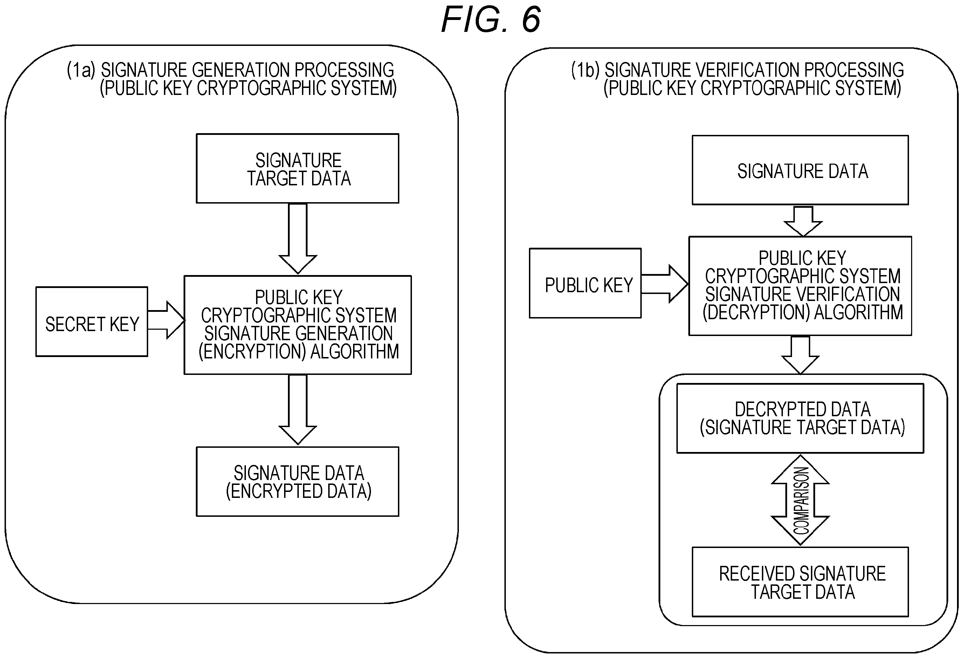

Fig. 6 illustrates sequences of signature generation processing and signature verification processing according to the public key cryptographic system.

As illustrated in Fig. 6(1a), in the signature generation processing according to the public key cryptographic system, a public key cryptographic system signature generation algorithm is executed applying a secret key to the signature target data to generate signature data.

In this case, the signature target data is the data (a) to (f) illustrated in Fig. 5. For example, the signature data is generated applying the secret key to a hash value of the configuration data (a) to (f).

Furthermore, as illustrated in Fig. 6(1b), in the signature verification processing according to the public key cryptographic system, a public key cryptographic system signature verification algorithm is executed applying the public key to the signature data to generate decrypted data (signature target data).

When the generated decrypted data (signature target data) matches the original data, that is, the data (a) to (f) illustrated in Fig. 5 or the hash values thereof, signature verification is established, that is, no data falsification is determined.

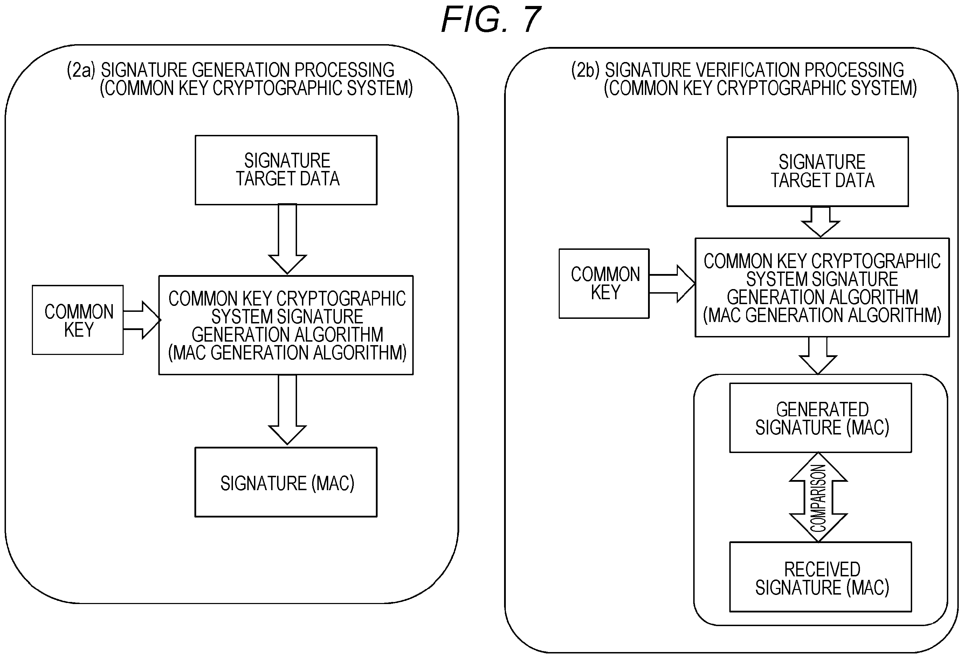

Fig. 7 illustrates sequences of signature (MAC) generation processing and signature verification processing according to the common key cryptographic system.

As illustrated in Fig. 7(2a), in the signature generation processing according to the common key cryptographic system, a common key cryptographic system signature generation algorithm is executed applying a common key to the signature target data to generate signature data (MAC).

In this case, the signature target data is the data (a) to (f) illustrated in Fig. 5. For example, the signature data is generated applying the common key to a hash value of the configuration data (a) to (f).

Furthermore, as illustrated in Fig. 7(2b), in the signature verification processing according to the common key cryptographic system, a common key cryptographic system signature verification algorithm is executed applying the common key to the signature data to generate signature data.

When the generated signature data matches the received signature data, the signature verification is established, that is, no data falsification is determined.

In step S104 in the sequence diagram illustrated in Fig. 4, the IC card 10 executes the above-described signature generation processing according to the public key cryptographic system or signature (MAC) generation processing according to the common key cryptographic system to generate and add the transaction log with card signature 100 illustrated in Fig. 5 to log data.

Note that, in the present example, the card-type IC card has been described as a representative example. However, the processing of the present disclosure is applicable not only to the card-type IC card but also to, for example, a portable terminal having an IC card function, and the "card signature" may be a signature generated by such a terminal (information processing apparatus).

### (step S105)

Next, in step S105, the IC card 10 stores the transaction log with card signature generated in step S104 in a storage unit (memory) in the IC card 10.

### (step S106)

Next, in step S106, the IC card 10 transmits the transaction log with card signature generated in step S104 to the reader/writer (R/W) 20.

### (step S107)

Next, in step S107, the reader/writer (R/W) 20 stores the transaction log with card signature received from the IC card 10 in a storage unit (memory) in the reader/writer (R/W) 20.

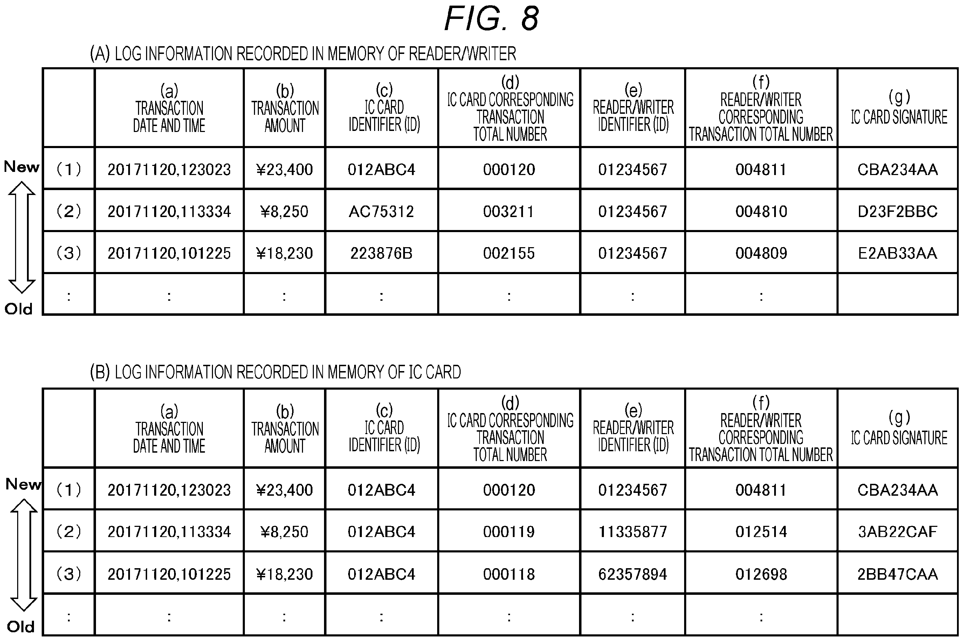

Fig. 8 illustrates examples of log information lists of
(A) log information stored in the storage unit (memory) in the reader/writer (R/W) 20, and
(B) log information stored in the storage unit (memory) in the IC card 10.

Both of the log information lists include the following data:
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20,
(f) the transaction total number of the reader/writer (R/W) 20, and
(g) an IC card signature.

The entry (1) in "(A) log information stored in the storage unit (memory) in the reader/writer (R/W) 20" illustrated in Fig. 8 and the entry (1) in "(B) log information stored in the storage unit (memory) in the IC card 10" are log information corresponding to the current transaction, and are the same data.

Note that "(e) the identifier of the reader/writer (R/W)" is the same among the entries of the log information stored in (A) log information stored in the storage unit (memory) in the reader/writer (R/W) 20 illustrated in Fig. 8, and "(f) the transaction total number of the reader/writer (R/W)" has a different value for each of the entries.

Meanwhile, "(c) the identifier (ID) of the IC card that has executed the transaction" is the same among the entries of the log information stored in (B) log information stored in the storage unit (memory) in the IC card 10 illustrated in Fig. 8, and "(d) the transaction total number of the IC card" has a different value for each of the entries.

### (step S108)

Next, in step S108, the reader/writer (R/W) 20 transmits the transaction log with card signature received from the IC card 10 to the management server 30.

Note that, in a case where the IC card 10 has a configuration capable of communication via a network such as a smartphone, for example, the IC card 10 itself may directly transmit the generated transaction log with card signature to the management server 30.

Furthermore, each of the reader/writer (R/W) 20 and the IC card 10 may be set to transmit the same log to the management server 30. The management server 30 determines that log information that matches the following data set to a reception log:
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20
is a duplicate reception log, and selects only one of the log information and stores the selected log information in the database.

### (step S109)

In step S109, when receiving the transaction log with signature from the reader/writer (R/W) 20, the management server 30 executes signature verification processing for the transaction log with signature.

The signature verification processing is executed as signature verification processing according to the public key cryptographic system described with reference to Fig. 6(1b) above in a case where the signature is a signature according to the public key cryptographic system.

Meanwhile, the signature verification processing is executed as signature verification processing according to the common key cryptographic system described with reference to Fig. 7(2b) above in a case where the signature is a signature according to the common key cryptographic system.

In a case where no data falsification for the log information is determined in the signature verification, the processing proceeds to next step S110.

On the other hand, in a case where data falsification for the log information is determined in the signature verification, the processing is stopped without proceeding to next step S110. In this case, for example, the management server 30 may notify the reader/writer (R/W) 20 of an error message.

### (step S110)

In the case where no data falsification for the log information is determined in the signature verification in step S109, the processing proceeds to next step S110.

In step S110, the management server 30 stores the transaction log with signature received from the reader/writer (R/W) 20 in the database.

### (step S111)

Next, in step S111, the management server 30 transmits the processing completion notification to the reader/writer 20.

A transaction, generation of a transaction log, and database storage processing using the IC card 10 are performed according to this sequence.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

In the present example, generation of a transaction log is executed by the IC card 10. Moreover, the IC card 10 sets a signature to the generated transaction log.

That is, the management server 30 receives the transaction log with signature of the IC card and performs the signature verification, and can determine whether or not the transaction log is a valid transaction log without falsification.

In the above-described processing according to the sequence diagram illustrated in Fig. 2, there is a possibility of falsification of the transaction log by the reader/writer (R/W) 20. By executing the sequence illustrated in Fig. 4, the possibility of falsification of the transaction log by the reader/writer (R/W) 20 can be reduced.

### [3. (Example 2) Example of transmitting history data of transaction log to management server]

Next, an example of transmitting history data of a transaction log to the management server will be described as Example 2.

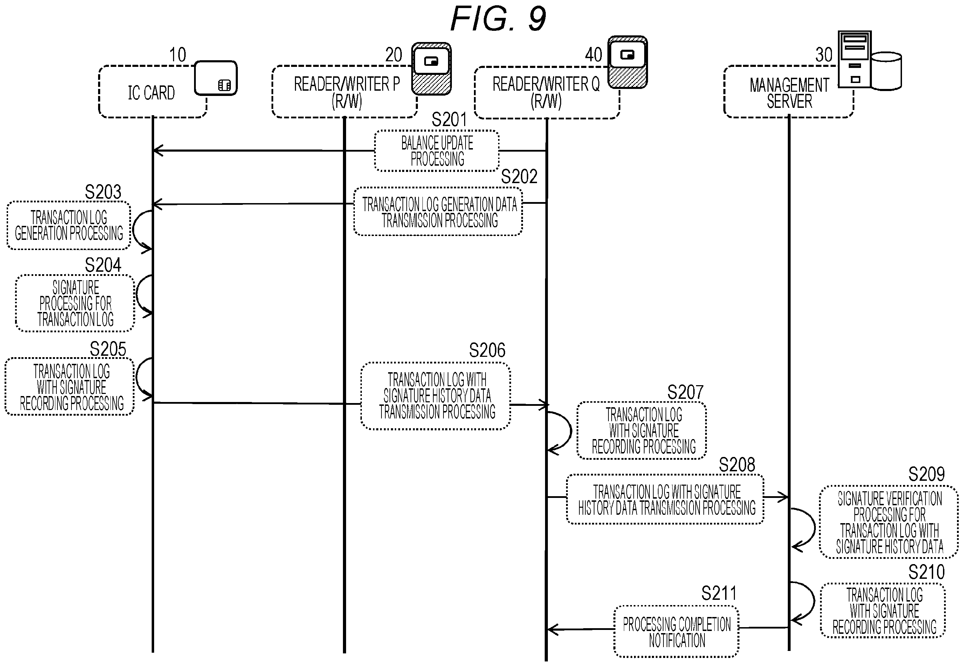

Fig. 9 illustrates a sequence diagram for describing a processing sequence according to the present example.

Fig. 9 illustrates the three configuration elements illustrated in Fig. 1, that is, the IC card 10, the reader/writer (R/W) 20, and the management server 30 and further illustrates one another reader/writer (R/W) 40, and chronologically illustrates communication among the devices and processing executed by the devices, similarly to Fig. 2 described above.

Note that transmitted/received data among the devices is favorably encrypted data.

It is assumed that the IC card 10 executes the processing according to the sequence diagram illustrated in Fig. 4 described in Example 1 with the reader/writer (R/W) 20 prior to performing a transaction with the reader/writer (R/W) 40.

That is, the processing according to the sequence diagram illustrated in Fig. 9 is executed after the processing according to the sequence diagram illustrated in Fig. 4.

Processing of steps illustrated in Fig. 9 will be sequentially described.

### (steps S201 to S205)

Processing in steps S201 to S205 is similar to the processing in steps S101 to S105 described with reference to Fig. 4 in Example 1 above.

That is, in step S201, the reader/writer (R/W) 40 performs processing of updating the balance of the IC card 10 according to the transaction amount.

Next, in step S202, the reader/writer (R/W) 40 transmits transaction log generation data to the IC card 10.

Next, in step S203, the IC card 10 generates a transaction log.

Next, in step S204, the IC card 10 adds a signature to the transaction log.

Next, in step S205, the IC card 10 stores the transaction log with signature in the storage unit (memory) of the IC card 10.

The transaction log with signature stored in the storage unit (memory) of the IC card 10 is the transaction log with card signature 100 described with reference to Fig. 5 above, and includes the following data:
(a) transaction date and time,
(b) a transaction amount,
(c) an identifier (ID) of the IC card 10 that has executed the transaction,
(d) a transaction total number of the IC card 10 that has executed the transaction,
(e) an identifier of the reader/writer (R/W) 40,
(f) a transaction total number of the reader/writer (R/W) 40, and
(g) an IC card signature.

### (step S206)

Processing in step S206 is different from the processing in step S106 in Example 1 described above.

In step S206, the IC card 10 transmits a transaction log with card signature generated in the past together with the transaction log with card signature generated in step S204 to the reader/writer (R/W) 40.

That is, the IC card 10 transmits transaction log history data including not only the latest transaction log with card signature corresponding to the current transaction but also at least the transaction log with card signature generated in an immediately preceding transaction to the reader/writer (R/W) 40.

Note that the past transaction log with card signature is stored in the storage unit (memory) of the IC card 10, and the IC card 10 acquires the past log from the storage unit (memory) and transmits the past log together with the latest transaction log with card signature corresponding to the current transaction to the reader/writer (R/W) 40.

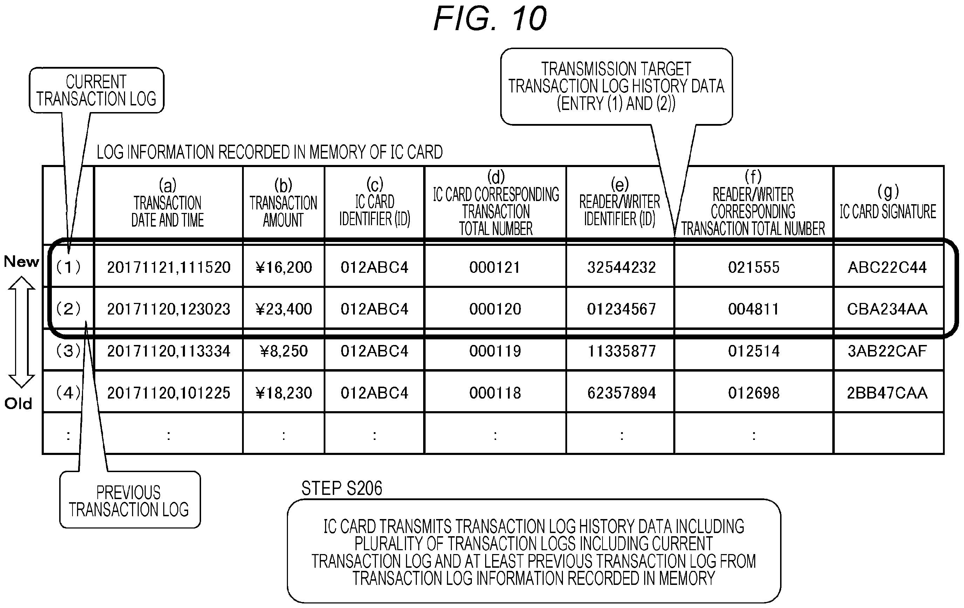

Fig. 10 is a diagram illustrating of history data of the transaction log with card signature stored in the storage unit (memory) of the IC card 10.

The history data of the transaction log with card signature illustrated in Fig. 10 is data in which log information including the following data is recorded in a chronological order from the latest entry (1):
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20,
(f) the transaction total number of the reader/writer (R/W) 20, and
(g) the IC card signature,
similarly to the log list described with reference to Fig. 8(B) above.

The transaction log with card signature corresponding to the current transaction is the entry (1). The transaction log with card signature corresponding to a previous transaction of the current transaction is the entry (2).

In step S206, the IC card 10 transmits the transaction log history data including at least the transaction log of the entry (2) that is a previous transaction log of the current transaction log of the entry (1) together with the current transaction log to the reader/writer (R/W) 40.

Note that data to be transmitted is not limited to two logs, and setting to include further past transaction logs (entries (3), (4), and the like) may be used.

### (step S207)

Next, in step S207, the reader/writer (R/W) 40 selects the transaction log with card signature corresponding to the current transaction from the transaction log with card signature history data received from the IC card 10, that is, the transaction log with card signature history data including the transaction log with card signature corresponding to the current transaction and the transaction log with card signature corresponding to the past transaction, and stores the selected transaction log with card signature in the storage unit (memory) in the reader/writer (R/W) 20.

### (step S208)

Next, in step S208, the reader/writer (R/W) 40 transmits the transaction log with card signature history data received from the IC card 10, that is, the transaction log with card signature history data including the transaction log with card signature corresponding to the current transaction and the transaction log with card signature corresponding to the past transaction, to the management server 30.

Note that, in the case where the IC card 10 has a configuration capable of communication via a network such as a smartphone, for example, the IC card 10 itself may directly transmit the transaction log with card signature history data to the management server 30.

### (step S209)

In step S209, when receiving the transaction log with signature history data from the reader/writer (R/W) 40, the management server 30 executes the signature verification processing for a plurality of transaction logs with signature included in the transaction log with signature history data.

The signature verification processing is executed as signature verification processing according to the public key cryptographic system described with reference to Fig. 6(1b) above in a case where the signature is a signature according to the public key cryptographic system.

Meanwhile, the signature verification processing is executed as signature verification processing according to the common key cryptographic system described with reference to Fig. 7(2b) above in a case where the signature is a signature according to the common key cryptographic system.

In a case where no data falsification for the log information is determined in the signature verification, the processing proceeds to next step S110.

On the other hand, in a case where data falsification for the log information is determined in the signature verification, the processing is stopped without proceeding to next step S210. In this case, for example, the management server 30 may notify the reader/writer (R/W) 40 of an error message.

### (step S210)

In the case where no data falsification for the log information is determined in the signature verification in step S209, the processing proceeds to next step S210.

In step S210, the management server 30 selects only an unrecorded transaction log with signature from the plurality of transaction logs with signature constituting the transaction log with signature history data received from the reader/writer (R/W) 40, and stores the selected unrecorded transaction log with signature in the database.

The plurality of transaction logs with signature constituting the transaction log with signature history data received from the reader/writer (R/W) 40 includes the transaction log with signature corresponding to the past transaction.

For example, a past transaction log generated in the processing performed between the IC card 10 and the reader/writer (R/W) 20 is included.

If the reader/writer (R/W) 20 has transmitted this transaction log to the management server 30, this transaction log has already been stored in the database of the management server 30.

However, in a case where the reader/writer (R/W) 20 has not transmitted the transaction log to the management server 30, the transaction log is not stored in the database of the management server 30, and for the first time, the management server 30 can acquire a previous transaction log from the transaction log history data received this time.

As described above, in the present example, even in the case of not transmitting a transaction log by action or failure to act of the reader/writer (R/W), the past transaction log is transmitted together with the latest log to the management server in a transaction executed by the same IC card afterward. Therefore, a fraud of "log non-transmission" by the reader/writer (R/W) can be found and prevented.

Note that, in a case where log transmission is normally executed by the reader/writer (R/W), the management server 30 receives the same log in duplicate. However, the management server 30 can determine that log information that matches the following data set to the reception log:
(c) an identifier (ID) of the IC card 10 that has executed the transaction,
(d) a transaction total number of the IC card 10 that has executed the transaction,
(e) an identifier of the reader/writer (R/W) 20, and
(f) a transaction total number of the reader/writer (R/W) 20
is a duplicate reception log, and can reliably determine whether or not a log has been processed.

### (step S211)

Next, in step S211, the management server 30 transmits the processing completion notification to the reader/writer 20.

A transaction, generation of a transaction log, and database storage processing using the IC card 10 are performed according to this sequence.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

In the present example, the generation of a transaction log is executed by the IC card 10, similarly to Example 1. Moreover, the IC card 10 sets a signature to the generated transaction log.

Moreover, the IC card 10 transmits the transaction log with card signature history data, that is, the transaction log with card signature history data including the transaction log with card signature corresponding to the current transaction and the transaction log with card signature corresponding to the past transaction, to the management server 30 via the reader/writer (R/W) 40.

The management server 30 performs signature verification for the plurality of transaction logs with signature included in the transaction log with signature history data of the IC card, and can store the log to the database and perform settlement processing or the like based on the log only in a case where the transaction log is a valid log without falsification, and is not a processed log.

By the processing of the present example, in a case where a log is not transmitted by the reader/writer (R/W), an unreceived log can be detected from transaction log history data to be received thereafter, and the fraud of not transmitting a log by the reader/writer (R/W) can be prevented.

### [4. (Example 3) Example of providing IC card signature and reader/writer (R/W) signature to generated transaction log of IC card]

Next, an example of providing an IC card signature and a reader/writer (R/W) signature to a generated transaction log of the IC card will be described as Example 3.

The present example is similar to Example 1 described with reference to Figs. 4 to 8 above in generating a transaction log on the IC card 10 side and adding the signature of the IC card 10 in the transaction log. Present Example 3 further sets a signature of the reader/writer (R/W) 20 to a transaction log with IC card signature.

That is, the IC card signature and the reader/writer (R/W) signature are provided to the generated transaction log of the IC card, and the transaction log to which the two signatures are set is transmitted to the management server 30.

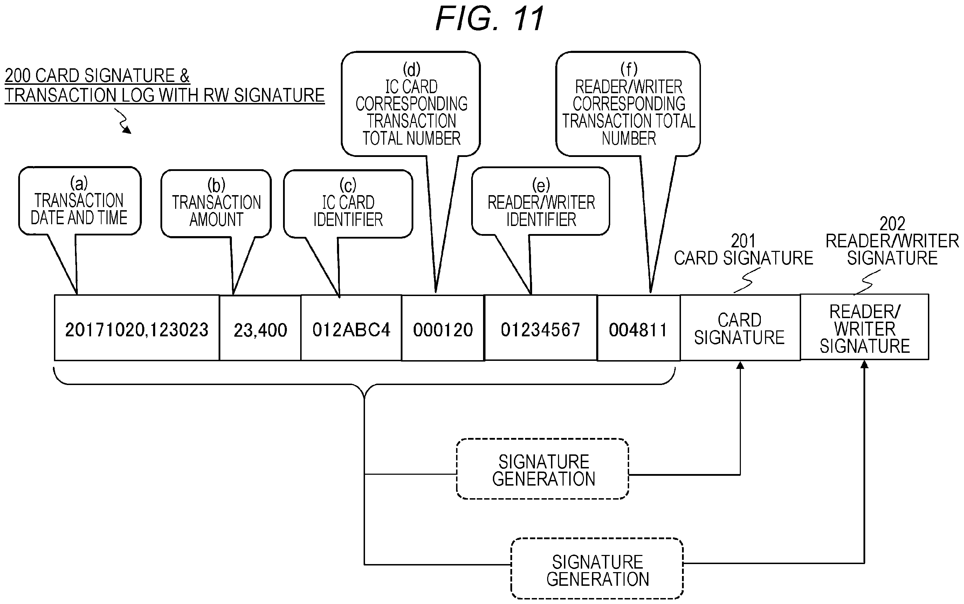

A data configuration example of a transaction log with card signature & reader/writer (RW) signature generated in present Example 3 is illustrated in Fig. 11.

As illustrated in Fig. 11, a transaction log with card signature & reader/writer (RW) signature 200 has a configuration obtained by adding a card signature 201 generated using the following configuration data (a) to (f) as signature target data and a reader/writer (R/W) signature 202 to a log:
(a) transaction date and time,
(b) a transaction amount,
(c) an identifier (ID) of the IC card 10 that has executed the transaction,
(d) a transaction total number of the IC card 10 that has executed the transaction,
(e) an identifier of the reader/writer (R/W) 20, and
(f) a transaction total number of the reader/writer (R/W) 20, which are transaction log configuration data.

Note that the card signature and the reader/writer (R/W) signature are, for example, signatures according to the public key cryptographic system or signatures according to the common key cryptographic system (message authentication code: MAC).

In the present example, the transaction log with card signature & reader/writer (RW) signature 200 having the data configuration illustrated in Fig. 11 is transmitted to the management server 30.

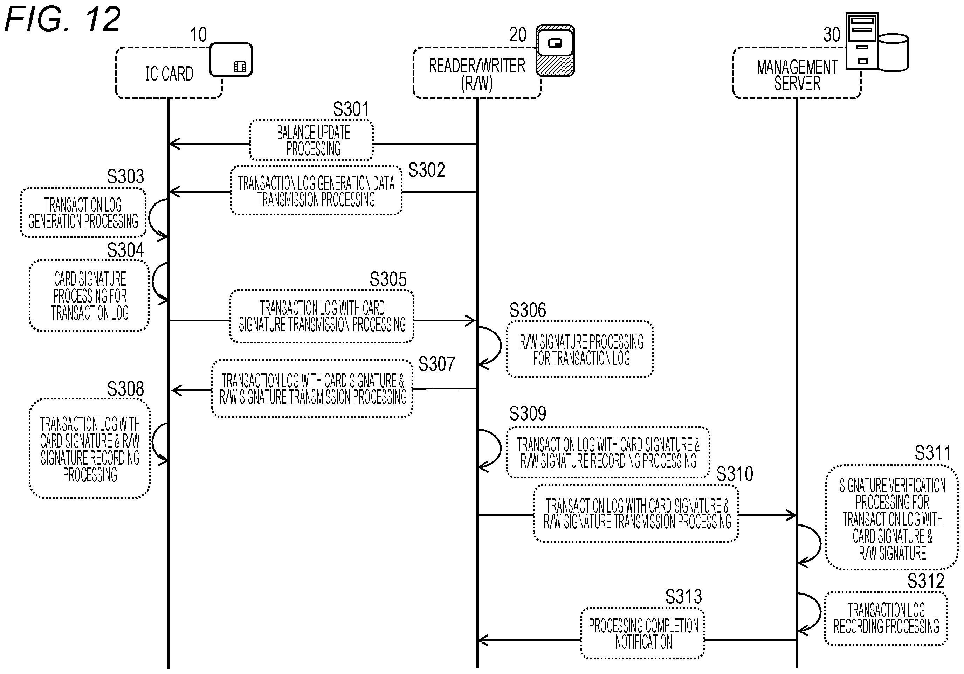

Fig. 12 illustrates a sequence diagram for describing a processing sequence according to the present example.

Fig. 12 illustrates the three configuration elements illustrated in Fig. 1 described above, that is, the IC card 10, the reader/writer (R/W) 20, and the management server 30, and chronologically illustrates communication among the devices and processing executed by the devices.

Note that transmitted/received data among the devices is favorably encrypted data.

Processing of steps illustrated in Fig. 12 will be sequentially described.

### (steps S301 to S304)

Processing in steps S301 to S304 is similar to the processing in steps S101 to S104 described with reference to Fig. 4 in Example 1 above.

That is, in step S301, the reader/writer (R/W) 20 performs processing of updating the balance of the IC card 10 according to the transaction amount.

Next, in step S302, the reader/writer (R/W) 20 transmits transaction log generation data to the IC card 10.

Next, in step S303, the IC card 10 generates a transaction log.

Next, in step S304, the IC card 10 adds the signature (card signature) to the transaction log.

### (step S305)

Next, in step S305, the IC card 10 transmits the transaction log with card signature to the reader/writer (R/W) 20.

### (step S306)

Next, in step S306, the reader/writer (R/W) 20 provides the signature (reader/writer (R/W) signature) to the transaction log with card signature received from the IC card 10. The signature target data is the transaction log configuration data.

By the signature processing, the "transaction log with card signature & reader/writer (RW) signature 200" described with reference to Fig. 11 above is generated.

### (step S307)

Next, in step S307, the reader/writer (R/W) 20 transmits the transaction log with card signature & reader/writer (RW) signature to the IC card 10.

### (steps S308 and S309)

In steps S308 and S309, the IC card 10 and the reader/writer (R/W) 20 stores the transaction log with card signature & reader/writer (RW) signature in the respective storage units (memories).

### (step S310)

Next, in step S310, the reader/writer (R/W) 20 transmits the transaction log with card signature & reader/writer (RW) signature to the management server 30.

Note that, in the case where the IC card 10 has a configuration capable of communication via a network such as a smartphone, for example, the IC card 10 itself may directly transmit the transaction log with card signature & reader/writer (RW) signature to the management server 30.

Furthermore, each of the reader/writer (R/W) 20 and the IC card 10 may be set to transmit the same log to the management server 30.

### (step S311)

In step S311, when receiving the transaction log with card signature & reader/writer (RW) signature from the reader/writer (R/W) 20, the management server 30 executes signature verification processing for the transaction log with card signature & reader/writer (RW) signature.

The signature verification processing is executed for the two signatures set to the transaction log with card signature & reader/writer (RW) signature, that is, the card signature and the reader/writer (R/W) signature.

The signature verification processing according to the public key cryptographic system described with reference to Fig. 6(1b) above is executed in a case where the signature is a signature according to the public key cryptographic system.

Meanwhile, the signature verification processing according to the common key cryptographic system described with reference to Fig. 7(2b) above is executed in a case where the signature is a signature according to the common key cryptographic system.

In a case where both the two signature verifications are established, that is, no data falsification for the log information is determined, the processing proceeds to next step S312.

On the other hand, in a case where at least one of the two signature verifications is not established, data falsification for the log information is determined, and the processing is stopped without proceeding to next step S312. In this case, for example, the management server 30 may notify the reader/writer (R/W) 20 of an error message.

### (step S312)

In a case where the two signature verifications executed in step S310 are established, and no data falsification for the log information is determined, the processing proceeds to next step S312.

In step S312, the management server 30 stores the transaction log with card signature & reader/writer (RW) signature received from the reader/writer (R/W) 20 in the database.

### (step S313)

Next, in step S313, the management server 30 transmits the processing completion notification to the reader/writer 20.

A transaction, generation of a transaction log, and database storage processing using the IC card 10 are performed according to this sequence.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

In the present example, generation of a transaction log is executed by the IC card 10. Moreover, both the IC card 10 and the reader/writer (R/W) 20 set the signatures for the transaction log.

That is, the management server 30 receives the transaction log with two signatures of the signature of the IC card and the reader/writer (R/W) and performs the two signature verifications and can determine whether or not the transaction log is a valid transaction log without falsification.

In this example, a fraud by the IC card can be prevented. For example, an act of generating a fraud log on the IC card side, or a fraud that can occur in a case where a signature key of the IC card is leaked can be prevented.

Note that, in the present example, a combination of the card-type IC card and the reader/writer (RW) has been described as a representative example. However, the processing of the present example is applicable not only to the card-type IC card but also to, for example, portable terminals having an IC card function, and the "card signature" may be a signature generated by such a terminal (first information processing apparatus).

Similarly, the reader/writer (RW) is not limited to a reader/writer installed in a shop or the like, and may be, for example, a second information processing apparatus that executes communication with a portable terminal, and the "reader/writer signature" may be a signature generated by such a second information processing apparatus.

This similarly applies to the following examples.

The above-described processing in Example 3 can be executed in combination with the processing of Example 2 described above, that is, the "example of transmitting history data of a transaction log to the management server".

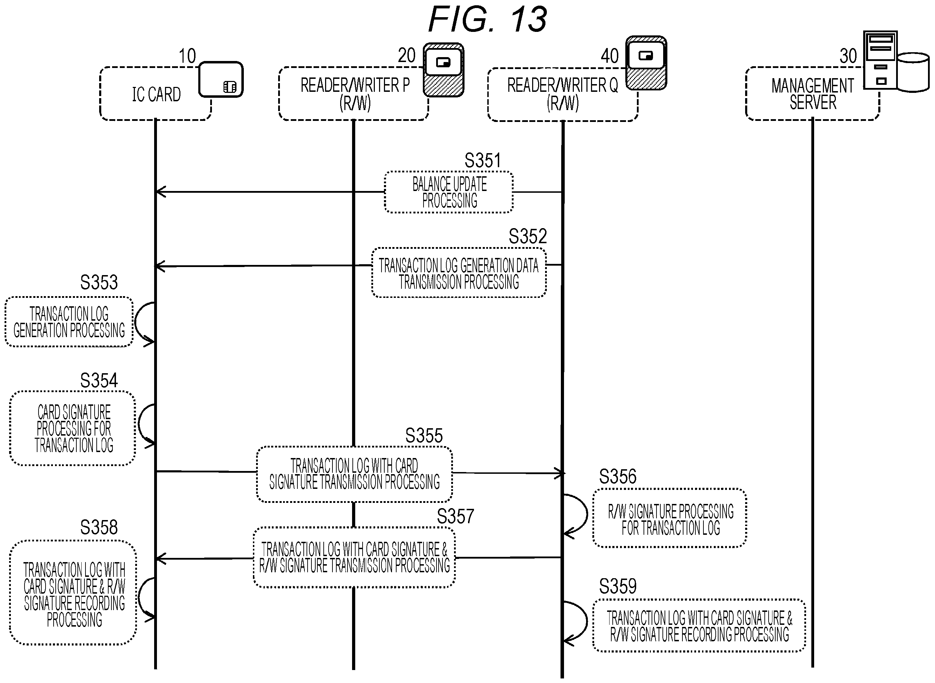

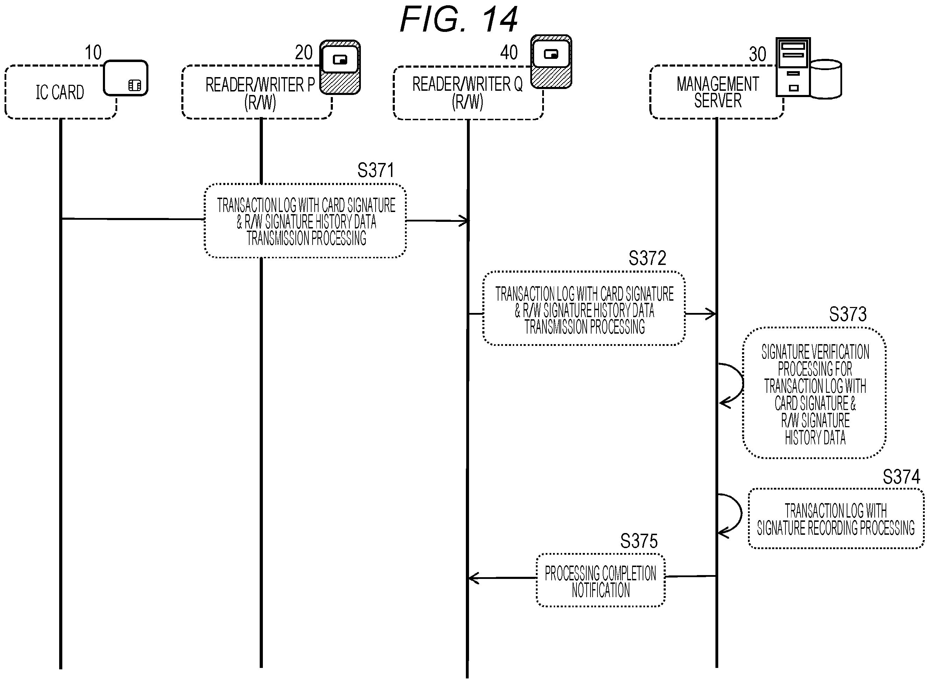

A processing sequence executed in combination of Example 3 with Example 2 will be described with reference to Figs. 13 and 14.

Figs. 13 and 14 illustrate the three configuration elements illustrated in Fig. 1, that is, the IC card 10, the reader/writer (R/W) 20, and the management server 30 and further illustrates one another reader/writer (R/W) 40, and chronologically illustrates communication among the devices and processing executed by the devices, similarly to Fig. 12.

Note that transmitted/received data among the devices is favorably encrypted data.

It is assumed that the IC card 10 executes the processing according to the above-described sequence diagram illustrated in Fig. 12 with the reader/writer (R/W) 20 prior to performing a transaction with the reader/writer (R/W) 40.

That is, the processing according to the sequence diagram illustrated in Fig. 13 is executed after the processing according to the sequence diagram illustrated in Fig. 12.

Processing of steps illustrated in Fig. 13 will be sequentially described.

### (steps S351 to S359)

Processing in steps S351 to S359 is processing similar to the processing in steps S301 to S309 described with reference to Fig. 12 executed between the IC card 10 and the reader/writer (R/W) 40.

That is, in step S351, the reader/writer (R/W) 40 performs processing of updating the balance of the IC card 10 according to the transaction amount.

Next, in step S352, the reader/writer (R/W 420 transmits the transaction log generation data to the IC card 10.

Next, in step S353, the IC card 10 generates a transaction log.

Next, in step S354, the IC card 10 adds the signature (card signature) to the transaction log.

Next, in step S355, the IC card 10 transmits the transaction log with card signature to the reader/writer (R/W) 40.

Next, in step S356, the reader/writer (R/W) 40 provides the signature (reader/writer (R/W) signature) to the transaction log with card signature received from the IC card 10. The signature target data is the transaction log configuration data.

By the signature processing, the "transaction log with card signature & reader/writer (RW) signature 200" described with reference to Fig. 11 above is generated.

Next, in step S357, the reader/writer (R/W) 40 transmits the transaction log with card signature & reader/writer (RW) signature to the IC card 10.

In steps S358 and S359, the IC card 10 and the reader/writer (R/W) 40 store the transaction log with card signature & reader/writer (RW) signature in the respective storage units (memories).

### (step S371)

Next, in step S371, the IC card 10 transmits the transaction log with card signature & reader/writer (RW) signature generated in the past together with the transaction log with card signature & reader/writer (RW) signature stored in the storage unit in step S358 to the reader/writer (R/W) 40.

That is, the IC card 10 transmits the transaction log history data including not only the latest transaction log with card signature & reader/writer (RW) signature corresponding to the current transaction but also at least the transaction log with card signature & reader/writer (RW) signature generated in an immediately preceding transaction to the reader/writer (R/W) 40.

Note that the past transaction log with card signature & reader/writer (RW) signature is stored in the storage unit (memory) of the IC card 10, and the IC card 10 acquires the past log from the storage unit (memory) and transmits the past transaction log with card signature & reader/writer (RW) signature together with the latest transaction log with card signature & reader/writer (RW) signature corresponding to the current transaction to the reader/writer (R/W) 40.

### (step S372)

Next, in step S372, the reader/writer (R/W) 40 transmits the transaction log with card signature & reader/writer (RW) signature history data received from the IC card 10, that is, the transaction log with card signature & reader/writer (RW) signature history data including the transaction log with card signature & reader/writer (RW) signature corresponding to the current transaction and the transaction log with card signature & reader/writer (RW) signature corresponding to the past transaction to the management server 30.

Note that, in the case where the IC card 10 has a configuration capable of communication via a network such as a smartphone, for example, the IC card 10 itself may directly transmit the transaction log with card signature & reader/writer (RW) signature history data to the management server 30.

### (step S373)

In step S373, when receiving the transaction log with card signature & reader/writer (RW) signature history data from the reader/writer (R/W) 40, the management server 30 executes signature verification processing for a plurality of the transaction logs with card signature & reader/writer (RW) signature included in the transaction log with card signature & reader/writer (RW) signature history data.

The signature verification processing is executed as signature verification processing according to the public key cryptographic system described with reference to Fig. 6(1b) above in a case where the signature is a signature according to the public key cryptographic system.

Meanwhile, the signature verification processing is executed as signature verification processing according to the common key cryptographic system described with reference to Fig. 7(2b) above in a case where the signature is a signature according to the common key cryptographic system.

In a case where no data falsification for the log information is determined in the signature verification, the processing proceeds to next step S374.

On the other hand, in a case where data falsification for the log information is determined in the signature verification, the processing is stopped without proceeding to next step S374. In this case, for example, the management server 30 may notify the reader/writer (R/W) 40 of an error message.

### (step S374)

In the case where no data falsification for the log information is determined in the signature verification in step S373, the processing proceeds to next step S374.

In step 374, the management server 30 selects only an unrecorded transaction log with signature from the plurality of transaction logs with signature constituting the transaction log with card signature & reader/writer (RW) signature history data received from the reader/writer (R/W) 40, and stores the selected unrecorded transaction log with signature in the database.

The plurality of transaction logs with signature constituting the transaction log with card signature & reader/writer (RW) signature history data received from the reader/writer (R/W) 40 includes the transaction log with signature corresponding to the past transaction.

For example, a past transaction log generated in the processing performed between the IC card 10 and the reader/writer (R/W) 20 is included.

If the reader/writer (R/W) 20 has transmitted this transaction log to the management server 30, this transaction log has already been stored in the database of the management server 30.

However, in a case where the reader/writer (R/W) 20 has not transmitted the transaction log to the management server 30, the transaction log is not stored in the database of the management server 30, and for the first time, the management server 30 can acquire a previous transaction log from the transaction log history data received this time.

That is, even in a case of not transmitting a transaction log by action or failure to act of the reader/writer (R/W), the past transaction log is transmitted together to the management server in a transaction executed by the same IC card afterward, and the fraud of not transmitting a log by the reader/writer (R/W) can be found.

### (step S375)

Next, in step S375, the management server 30 transmits the processing completion notification to the reader/writer 20.

A transaction, generation of a transaction log, and database storage processing using the IC card 10 are performed according to this sequence.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

As described above, in the configuration in which Example 2 and Example 3 are combined, following various frauds can be detected.

Detection of generation and transmission of a fraud log by the reader/writer (R/W).

Detection of generation of a fraud log by the IC card.

Detection of non-transmission of a log by act or failure to act of the reader/writer (R/W).

### [5. (Example 4) Example using transaction log with chain signature]

Next, an example using a transaction log with chain signature will be described as Example 4.

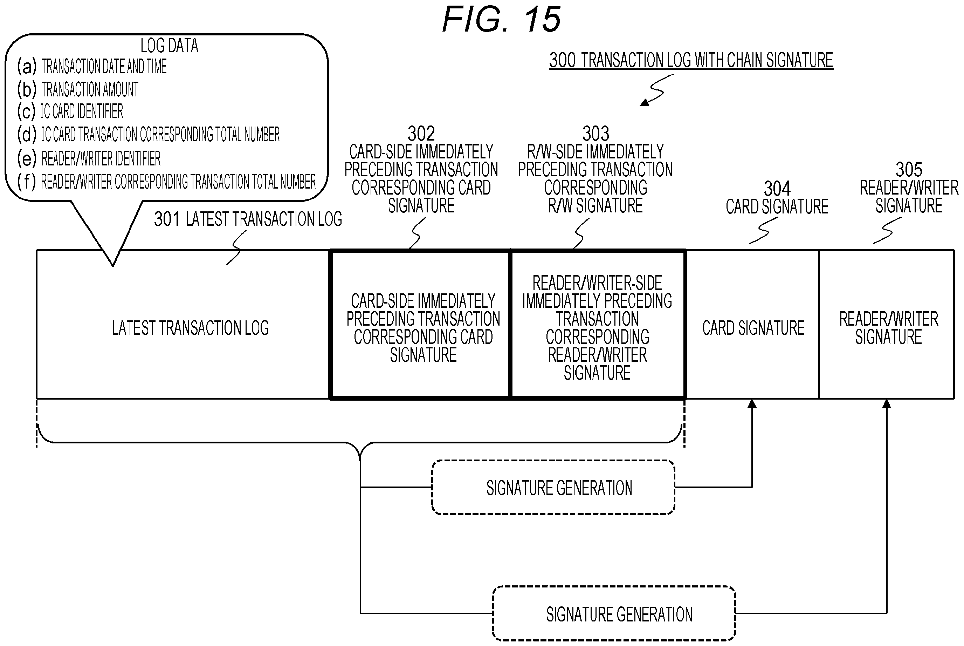

A data configuration example of the transaction log with chain signature will be described with reference to Fig. 15.

As illustrated in Fig. 15, a transaction log with chain signature 300 includes the following data:
(1) a latest transaction log 301,
(2) a card-side immediately preceding transaction corresponding card signature 302,
(3) a reader/writer (R/W)-side immediately preceding transaction corresponding reader/writer (R/W) signature 303,
(4) a card signature 304, and
(5) a reader/writer (R/W) signature 305.

"(1) The latest transaction log 301" is the latest transaction log data generated in the latest transaction between the IC card and the reader/writer (R/W).
   The latest transaction log 301 includes log information described with reference to Fig. 3 and the like above. That is, these data are included:
   (a) transaction date and time,
   (b) a transaction amount,
   (c) an identifier (ID) of the IC card that has executed the transaction,
   (d) a transaction total number of the IC card that has executed the transaction,
   (e) an identifier of the reader/writer (R/W), and
   (f) a transaction total number of the reader/writer (R/W).
"(2) The card-side immediately preceding transaction corresponding card signature 302" is card signature data corresponding to a transaction executed before the latest transaction recorded in the latest transaction log 301 by the IC card that has executed a transaction recorded in the latest transaction log 301, that is, card signature data corresponding to an immediately preceding transaction generated in the "immediately preceding transaction".
"(3) The reader/writer (R/W)-side immediately preceding transaction corresponding reader/writer (R/W) signature 303" is reader/writer (R/W) signature data corresponding to a transaction executed before the latest transaction recorded in the latest transaction log 301 by the reader/writer (R/W) that has executed a transaction recorded in the latest transaction log 301, that is, reader/writer (R/W) signature data corresponding to an immediately preceding transaction generated in the "immediately preceding transaction".
"(4) The card signature 304" is a card signature generated by the IC card that has executed a transaction recorded in the latest transaction log 301, using the following data as signature target data:
   (1) the latest transaction log 301,
   (2) the card-side immediately preceding transaction corresponding card signature 302,
   (3) the reader/writer (R/W)-side immediately preceding transaction corresponding reader/writer (R/W) signature 303.

   This "(4) the card signature 304" is a card signature newly generated at the time of executing the latest transaction.
"(5) The reader/writer (R/W) signature 305" is a card signature generated by the reader/writer (R/W) that has executed a transaction recorded in the latest transaction log 301, using the following data as signature target data:
   (1) the latest transaction log 301,
   (2) the card-side immediately preceding transaction corresponding card signature 302, and
   (3) the reader/writer (R/W)-side immediately preceding transaction corresponding reader/writer (R/W) signature 303.

This "(5) the reader/writer (R/W) signature 305" is a reader/writer (R/W) signature newly generated at the time of executing the latest transaction.

As described above, the transaction log with chain signature 300 includes the following data:
(1) the latest transaction log 301,
(2) the card-side immediately preceding transaction corresponding card signature 302,
(3) the reader/writer (R/W)-side immediately preceding transaction corresponding reader/writer (R/W) signature 303,
(4) the card signature 304, and
(5) the reader/writer (R/W) signature 305.

The following data:
(2) the card-side immediately preceding transaction corresponding card signature 302, in the data (1) to (5), is acquired from the storage unit (memory) in the IC card that has executed the latest transaction corresponding to "(1) the latest transaction log 301".
   Furthermore, the following data:
(3) the reader/writer (R/W)-side immediately preceding transaction corresponding reader/writer (R/W) signature 303
   is acquired from the storage unit (memory) in the reader/writer (R/W) that has executed the latest transaction corresponding to "(1) the latest transaction log 301".

As illustrated in Fig. 15, the transaction log with chain signature 300 is log data obtained by setting a new card signature and a new reader/writer (R/W) signature to signature target data that is data obtained by adding the signature data corresponding to immediately preceding transactions respectively executed by the IC card and the reader/writer (R/W) to the latest transaction log 301 at the time of executing the latest transaction between the IC card and the reader/writer (R/W).

Note that the transaction in which the signatures of
(2) the card-side immediately preceding transaction corresponding card signature 302, and
(3) the reader/writer (R/W)-side immediately preceding transaction corresponding reader/writer (R/W) signature 303
   in the transaction log with chain signature 300 illustrated in Fig. 15 have been performed is not limited to the combination of the IC card and the reader/writer (R/W) that have executed the current "latest transaction".

For example, assuming that a transaction recorded in "(1) the latest transaction log 301" in the transaction log with chain signature 300 illustrated in Fig. 15 is executed between an "IC card A" and a "reader/writer (R/W) P".

In this case,
the card signature recorded in the "(2) the card-side immediately preceding transaction corresponding card signature 302" is a signature of the IC card A but an immediately preceding transaction where the signature has been performed is not necessarily to a transaction between the IC card A and the reader/writer (R/W) P. The signature may be a signature at the time of a transaction executed by the IC card A with a reader/writer (R/W) other than the reader/writer (R/W) P.

Similarly, the reader/writer (R/W) signature recorded in "(3) the reader/writer (R/W)-side immediately preceding transaction corresponding reader/writer (R/W) signature 303" is a signature of the reader/writer (R/W) P but an immediately preceding transaction where the signature has been performed is not necessarily a transaction between the IC card A and the reader/writer (R/W) P. The signature may be a signature at the time of a transaction executed by the reader/writer (R/W) P with an IC card other than the IC card A.

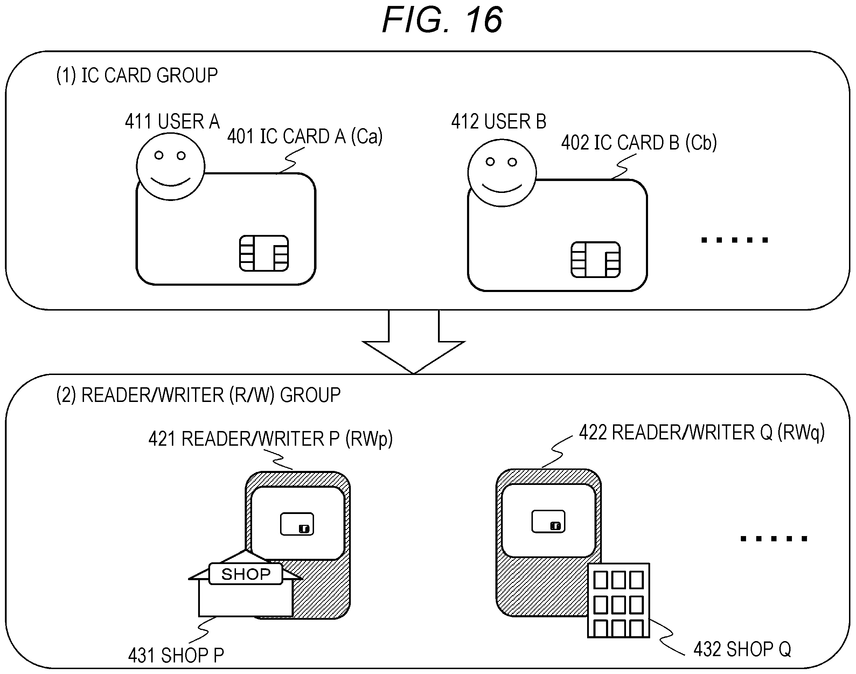

A specific example of processing of generating the transaction log with chain signature 300 will be described with reference to Fig. 16 and subsequent drawings.

Fig. 16 illustrates:
(1) an IC card group, and
(2) a reader/writer (R/W) group.

In (1) the IC card group, an IC card A (Ca) 401, an IC card B (Cb) 402, and the like owned by various users 411, 412, and the like are illustrated.

In (2) the reader/writer (R/W) group, a reader/writer P (RWp) 421, a reader/writer Q (RWq) 422, and the like installed in various shops 431, 432, and the like are illustrated.

The users 411, 412, and the like perform a transaction using the reader/writer P (RWp) 421, the reader/writer Q (RWq) 422, and the like in the various shops 431, 432, and the like, using the IC card A (Ca) 401, the IC card B (Cb) 402, and the like respectively owned by the users.

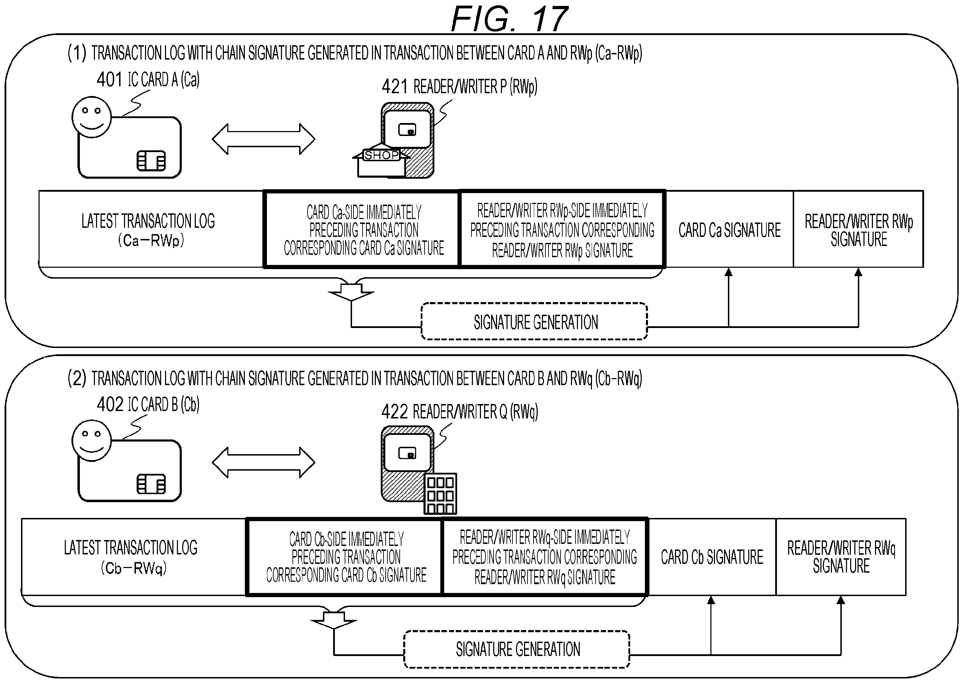

A data configuration example of a transaction log with chain signature generated in each transaction will be described with reference to Fig. 17.

Fig. 17(1) is a diagram illustrating a data configuration of a transaction log with chain signature generated in a transaction (Ca-RWp) between the IC card A (Ca) and the reader/writer P (RWp). This log data includes the following data:
(1) a latest transaction log,
(2) a card Ca-side immediately preceding transaction corresponding card signature,
(3) a reader/writer RWp-side immediately preceding transaction corresponding reader/writer RWp signature,
(4) a card Ca signature, and
(5) a reader/writer RWp signature.

(1) The latest transaction log is a log corresponding to the transaction (Ca-RWp) between the IC card A (Ca) and the reader/writer P (RWp).
   These data are included:
   (a) transaction date and time,
   (b) a transaction amount,
   (c) an identifier (ID) of the IC card that has executed the transaction,
   (d) a transaction total number of the IC card that has executed the transaction,
   (e) an identifier of the reader/writer (R/W), and
   (f) a transaction total number of the reader/writer (R/W).
(2) The card-side immediately preceding transaction corresponding card signature is signature data of the IC card A (Ca) of the transaction log with chain signature generated at the time of an immediately preceding transaction of the IC card A (Ca), and is data obtained from the memory of the IC card A (Ca).
(3) The reader/writer RWp-side immediately preceding transaction corresponding reader/writer RWp signature is signature data of the reader/writer P (RWp) of the transaction log with chain signature generated at the time of an immediately preceding transaction of the reader/writer P (RWp).
(4) The card Ca signature is a signature of the IC card A (Ca) newly obtained by the IC card A (Ca), using the data "(1) the latest transaction log + (2) the card Ca-side immediately preceding transaction corresponding card Ca signature + (3) the reader/writer RWp-side immediately preceding transaction corresponding reader/writer RWp signature" as signature target data.
(5) The reader/writer RWp signature is a signature of the reader/writer P (RWp) newly generated by the reader/writer P (RWp), using "(1) the latest transaction log + (2) the card Ca-side immediately preceding transaction corresponding card Ca signature + (3) the reader/writer RWp-side immediately preceding transaction corresponding reader/writer RWp signature" as the signature target data.

Fig. 17(2) is a diagram illustrating a data configuration of a transaction log with chain signature generated in a transaction (Cb-RWq) between the IC card B (Cb) and the reader/writer Q (RWq). This log data includes the following data:
(1) a latest transaction log,
(2) a card Cb-side immediately preceding transaction corresponding card Cb signature,
(3) a reader/writer RWq-side immediately preceding transaction corresponding reader/writer RWq signature,
(4) a card Cb signature, and
(5) a reader/writer RWq signature.

(1) The latest transaction log is a log corresponding to the transaction (Cb-RWq) between the IC card B (Cb) and the reader/writer Q (RWq).
   These data are included:
   (a) transaction date and time,
   (b) a transaction amount,
   (c) an identifier (ID) of the IC card that has executed the transaction,
   (d) a transaction total number of the IC card that has executed the transaction,
   (e) an identifier of the reader/writer (R/W), and
   (f) a transaction total number of the reader/writer (R/W).
(2) The card Cb-side immediately preceding transaction corresponding card Cb signature is signature data of the IC card B (Cb) of the transaction log with chain signature generated at the time of an immediately preceding transaction of the IC card B (Cb), and is data acquired from the memory of the IC card B (Cb).
(3) The reader/writer RWq-side immediately preceding transaction corresponding reader/writer RWq signature is signature data of the reader/writer Q (RWq) of the transaction log with chain signature generated at the time of an immediately preceding transaction of the reader/writer Q (RWq), and is data acquired from the memory of the reader/writer Q (RWq).
(4) The card Cb signature is a signature of the IC card B (Cb) newly generated by the IC card B (Cb), using "(1) the latest transaction log + (2) the card Cb-side immediately preceding transaction corresponding card Cb signature + (3) the reader/writer RWq-side immediately preceding transaction corresponding reader/writer RWq signature" as signature target data.
(5) The reader/writer RWq signature is a signature of the reader/writer Q (RWq) newly generated by the reader/writer Q (RWq), using "(1) the latest transaction log + (2) the card Cb-side immediately preceding transaction corresponding card CB signature + (3) the reader/writer RWq-side immediately preceding transaction corresponding reader/writer RWq signature" as the signature target data.

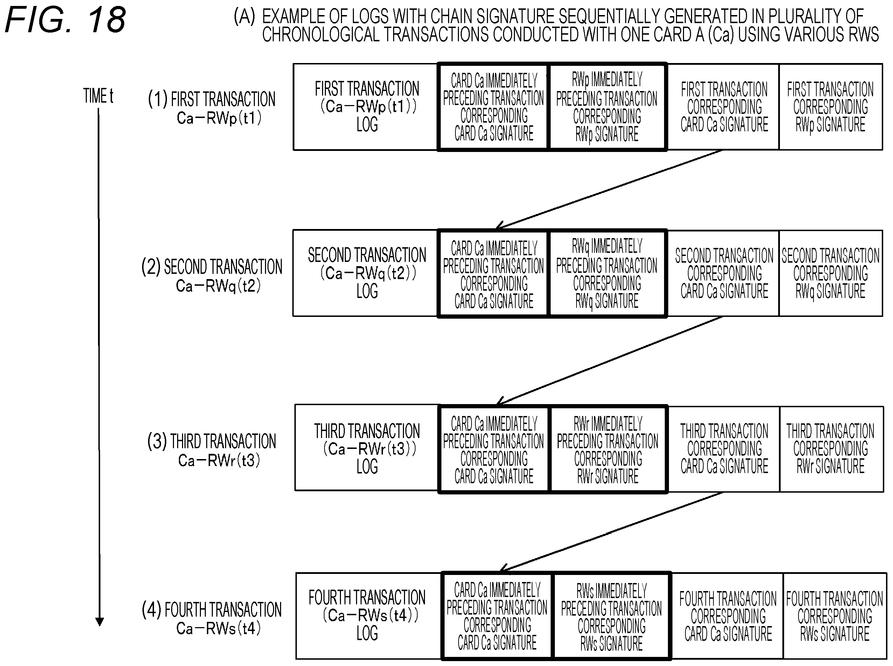

Fig. 18 illustrates examples of logs with chain signature sequentially generated in a plurality of chronological transactions performed by one IC card A (Ca), using various RWs.

The IC card A (Ca) sequentially executes (1) a first transaction to (4) a fourth transaction illustrated in Fig. 18 with the passage of time (t1 to t4).

There are various reader/writers (R/W) that perform transactions with the IC card A (Ca).

The IC card A (Ca) executes a transaction with the reader/writer P (RWp) in the first transaction at the time t1, a transaction with the reader/writer Q (RWq) in the second transaction at the time t2, a transaction with a reader/writer R (RWr) in the third transaction at the time t3, and a transaction with a reader/writer S (RWs) in the fourth transaction at the time t4.

The arrows connecting the logs illustrated in Fig. 18 are lines connecting the same signature data included in the logs.

For example, the "card Ca immediately preceding transaction corresponding card Ca signature" recorded as the signature target data in "(2) the second transaction (Ca-RWq)" executed at the time t2 is a "first transaction corresponding card Ca signature" recorded in the log generated in "(1) the first transaction (Ca-RWp)" executed before the second transaction.

This "first transaction corresponding card Ca signature" is acquired from the memory of the IC card A (Ca) .

Similarly, the "card Ca immediately preceding transaction corresponding card Ca signature" recorded as the signature target data in "(3) the third transaction (Ca-RWr)" executed at the time t3 is a "second transaction corresponding card Ca signature" recorded in the log generated in "(2) the second transaction (Ca-RWq)" executed before the third transaction.

The "card Ca immediately preceding transaction corresponding card Ca signature" recorded as the signature target data in "(4) the fourth transaction (Ca-RWs)" executed at the time t4 is a "third transaction corresponding card Ca signature" recorded in the log generated in "(3) the third transaction (Ca-RWr)" executed before the fourth transaction.

These signatures are acquired from the memory of the IC card A (Ca).

As described above, the signature generated in the immediately preceding transaction of the IC card is included as the signature target data of the subsequent log in each of the plurality of chronological logs generated corresponding to the chronological transactions executed by one IC card.

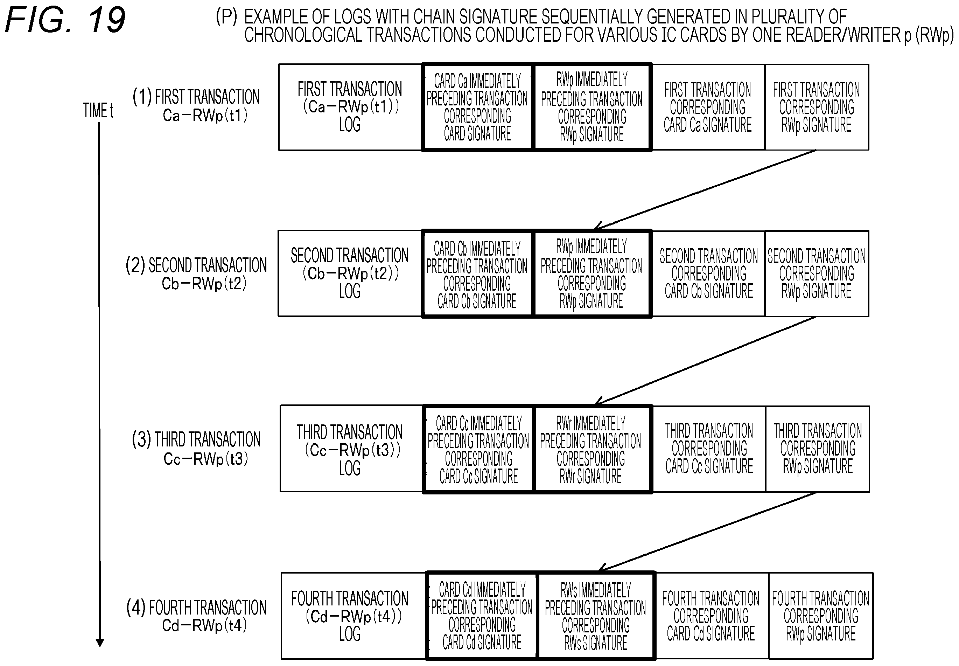

Meanwhile, Fig. 19 illustrates examples of logs with chain signature sequentially generated in a plurality of chronological transactions performed by one reader/writer P (RWp), using various IC cards.

The reader/writer P (RWp) sequentially executes (1) a first transaction to (4) a fourth transaction illustrated in Fig. 19 with the passage of time (t1 to t4) .

There are various IC cards that perform transactions with the reader/writer P (RWp).

The reader/writer P (RWp) executes a transaction with the IC card A (Ca) in the first transaction at the time t1, a transaction with the IC card B (Cb) in the second transaction at the time t2, a transaction with an IC card C (Cc) in the third transaction at the time t3, and a transaction with an IC card D (Cd) in the fourth transaction at the time t4.

The arrows connecting the logs illustrated in Fig. 19 are lines connecting the same signature data included in the logs.

For example, the "reader/writer RWp immediately preceding transaction corresponding reader/writer RWp signature" recorded as the signature target data in "(2) the second transaction (Cb-RWp)" executed at the time t2 is a "first transaction corresponding reader/writer RWp signature" recorded in the log generated in "(1) the first transaction (Ca-RWp)" executed before the second transaction.

The "first transaction corresponding reader/writer RWp signature" is acquired from the memory of the reader/writer P (RWp).

Similarly, the "reader/writer RWp immediately preceding transaction corresponding reader/writer RWp signature" recorded as the signature target data in "(3) the third transaction (Cc-RWp)" executed at the time t3 is a "second transaction corresponding reader/writer RWp signature" recorded in the log generated in "(2) the second transaction (Cb-RWp)" executed before the third transaction.

The "reader/writer RWp immediately preceding transaction corresponding reader/writer RWp signature" recorded as the signature target data in "(4) the fourth transaction (Ca-RWs)" executed at the time t4 is a "third transaction corresponding reader/writer RWp signature" recorded in the log generated in "(3) the third transaction (Ca-RWr)" executed before the fourth transaction.

These signatures are acquired from the memory of the reader/writer P (RWp).

As described above, the signature generated in the immediately preceding transaction of the reader/writer is included as the signature target data of the subsequent log in each of the plurality of chronological logs generated corresponding to the chronological transactions executed by one reader/writer.

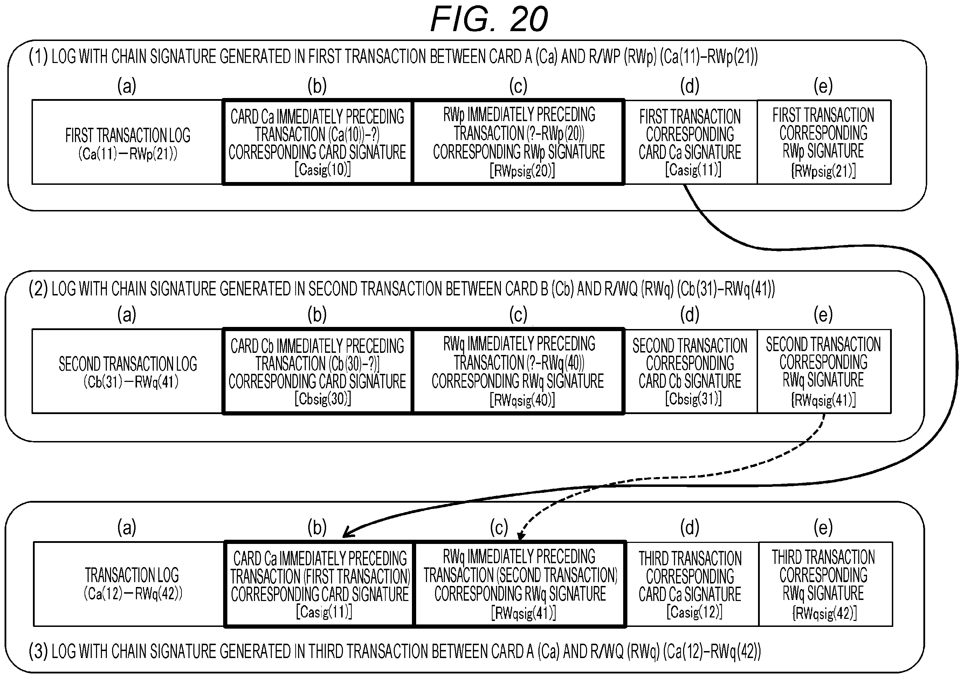

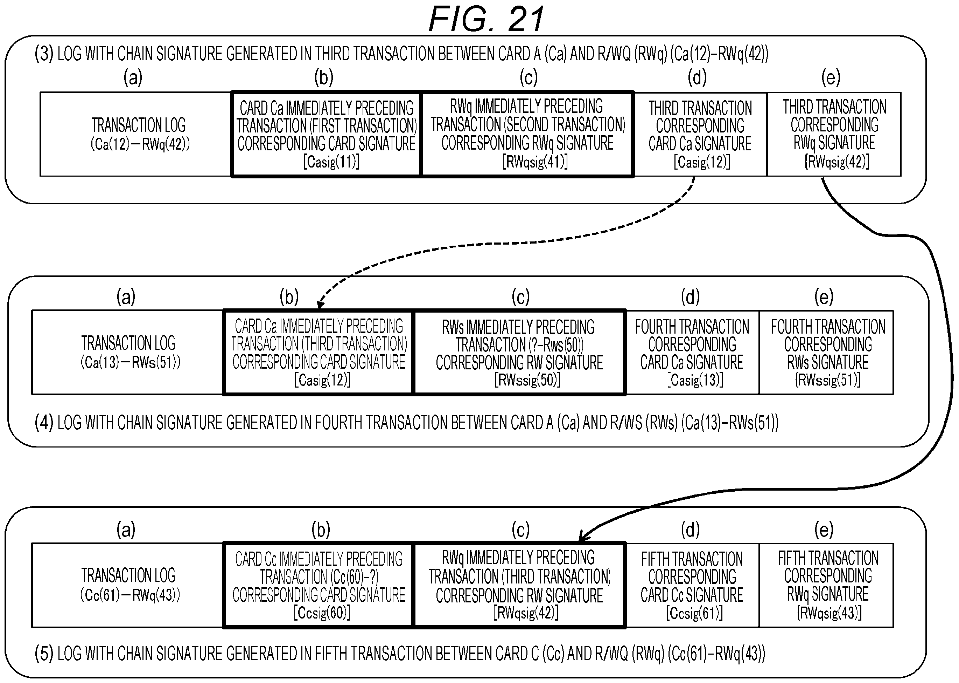

Moreover, data configuration examples of transaction logs with chain signature generated in transactions executed between various different IC cards and the reader/writer (RW) will be described with reference to Figs. 20 and 21.

Figs. 20 and 21 illustrate data configurations of transaction logs with chain signature generated in the following five chronological transactions:
(1) a transaction log with chain signature generated in a transaction (Ca(11)-RWp(21)) between the IC card A (Ca) and the reader/writer P (RWp),
(2) a transaction log with chain signature generated in a transaction (Cb(31)-RWq(41)) between the IC card B (Cb) and the reader/writer Q (RWq),
(3) a transaction log with chain signature generated in a transaction (Ca(12)-RWq(42)) between the IC card A (Ca) and the reader/writer Q (RWq),
(4) a transaction log with chain signature generated in a transaction (Ca(13)-RWs(51)) between the IC card A (Ca) and the reader/writer S (RWs), and
(5) a transaction log with chain signature generated in a transaction (Cc(61)-RWq(43)) between the IC card C (Cc) and the reader/writer Q (RWq).

It is assumed that the transaction (1) is the earliest transaction, and the transactions (2), (3), (4), and (5) are sequentially performed thereafter.

Note that numerical values of (11) and (21) included in Ca(11) and RWp(21) indicate individual transaction total numbers of cards and reader/writers.

Ca(11) indicates the eleventh transaction of an IC card Ca.

The next transaction for the IC card Ca is Ca(12), which is the transaction illustrated in Fig. 20(3).

Similarly, RWp(20) indicates the twentieth transaction of the reader/writer P (RWp). The next transaction for the reader/writer P (RWp) is RWp(21). This transaction is not illustrated in Figs. 20 and 21.

An arrow connecting transaction logs is an arrow connecting a signature set to a preceding log and an immediately preceding transaction corresponding log recorded in a subsequent log, and indicates that these logs have the same signature data.

Record data of the transaction log with chain signature generated in the first transaction (Ca(11)-RWp(21)) illustrated in Fig. 20(1) is as follows:
(a) the first transaction log (Ca(11)-RWp(21)),
(b) a card Ca immediately preceding transaction (Ca(10)-?) corresponding card signature [Casig(10)],
(c) a reader/writer RWp immediately preceding transaction (?-RWp(20)) corresponding reader/writer (R/W) signature [RWpsig(20)],
(d) a first transaction corresponding card Ca signature [Casig(11)], and
(e) a reader/writer (R/W) signature [RWpsig(21)].

(a) The first transaction log (Ca(11)-RWp(21)) records transaction log information such as transaction date and time, and an amount. Note that (Ca(11)-RWp(21)) indicates the transaction log of the eleventh transaction of the IC card (Ca) and the twenty-first transaction of the reader/writer (RWp).
(b) The card Ca immediately preceding transaction (Ca(10)-?) corresponding card signature [Casig(10)] records a signature [Casig(10)] set to the transaction log with chain signature generated at the immediately preceding transaction of the IC card (Ca), that is, the tenth transaction of the IC card (Ca).
   The signature [Casig(10)] indicates a signature generated at the time of the tenth transaction of the IC card (Ca).
   Note that the transaction (Ca(10)-?) indicates the tenth transaction of the IC card (Ca) and indicates that the reader/writer (RW) is unspecified. In practice, the signature is a signature generated in a transaction with a specific reader/writer (RWx).
(c) The reader/writer RWp immediately preceding transaction (?-RWp(20)) corresponding reader/writer (R/W) signature [RWpsig(20)] indicates a signature generated at the time of the twentieth transaction of the reader/writer P (RWp).
   Note that the transaction (?-RWp(20)) is the twentieth transaction of the reader/writer P (RWp), and IC card=? indicates an IC card not illustrated in the drawing. In practice, the signature is a signature generated in a transaction with a specific IC card.
(d) The first transaction corresponding card Ca signature [Casig(11)] is a signature of the IC card A (Ca) newly generated in the first transaction (Ca(11)-RWp(21)) in which this log is generated.
(e) The reader/writer (R/W) signature [RWpsig(21)] is a signature of the reader/writer P (RWp) newly generated in the first transaction (Ca(11)-RWp(21)) in which this log is generated.
(d) The first transaction corresponding card Ca signature [Casig(11)], and
(e) the reader/writer (R/W) signature [RWpsig(21)]
   are signatures set by using the data (a) to (c) below as the signature target data:
(a) the first transaction log (Ca(11)-RWp(21)),
(b) the card Ca immediately preceding transaction (Ca(10)-?) corresponding card signature [Casig(10)], and
(c) the reader/writer RWp immediately preceding transaction (?-RWp(20)) corresponding reader/writer (R/W) signature [RWpsig(20)].

Hereinafter, similar transaction logs with chain signature are generated in (2) the second transaction to (5) the fifth transaction.

Note that this transaction log with chain signature is stored in the storage units (memories) of both the IC card and the reader/writer that have executed the transaction in which the transaction log with chain signature is generated.

In the example illustrated in Fig. 20, the following signature data in the transaction log with chain signature generated in the third transaction (Ca(12)-RWq(42)) illustrated in Fig. 20(3), that is,
(b) the card Ca immediately preceding transaction (first transaction) corresponding card signature [Casig(11)]
is data matching the first transaction corresponding card Ca signature [Casig(11)] in the transaction log with chain signature generated in (1) the first transaction.

Similarly, the following signature data in the transaction log with chain signature of the third transaction (Ca(12)-RWq(42)) illustrated in Fig. 20(3), that is,
(c) the reader/writer RWq immediately preceding transaction (second transaction) corresponding reader/writer RWq [RWqsig(41)]
is data matching the second transaction corresponding reader/writer RWq signature [RWqsig(41)] in the transaction log with chain signature generated in (2) the second transaction.

Fig. 21 illustrates a log similar to the log of (3) the third transaction illustrated in Fig. 20 and fourth and fifth transaction corresponding transaction logs with chain signature.

In the example illustrated in Fig. 21, the following signature data in the transaction log with chain signature generated in the fourth transaction (Ca(13)-RWs(51)) illustrated in Fig. 21(4), that is,
(b) the card Ca immediately preceding transaction (third transaction) corresponding card signature [Casig(12)]
is data matching the third transaction corresponding card Ca signature [Casig(12)] in the transaction log with chain signature generated in (3) the third transaction.

Similarly, the following signature data in the transaction log with chain signature of the fifth transaction (Cc(61)-RWq(43)) illustrated in Fig. 21(5), that is,
(c) the reader/writer RWq immediately preceding transaction (third transaction) corresponding reader/writer (R/W) signature [RWqsig(42)]
is data matching the third transaction corresponding reader/writer RWq signature [RWsig(42)] in the transaction log with chain signature generated in (3) the third transaction.

As described above, to each of the transaction logs with chain signature generated corresponding to the chronological transactions, the signatures (the IC card-side immediately preceding transaction IC card signature and the RW-side immediately preceding transaction RW signature) generated by the IC card and the reader/writer that have executed the transaction at the time of transactions executed immediately before the transaction are added and recorded. Moreover, the new IC card signature and the new reader/writer (R/W) signature are additionally set using data including the two immediately preceding transaction corresponding signature data and the log data as the signature target data.

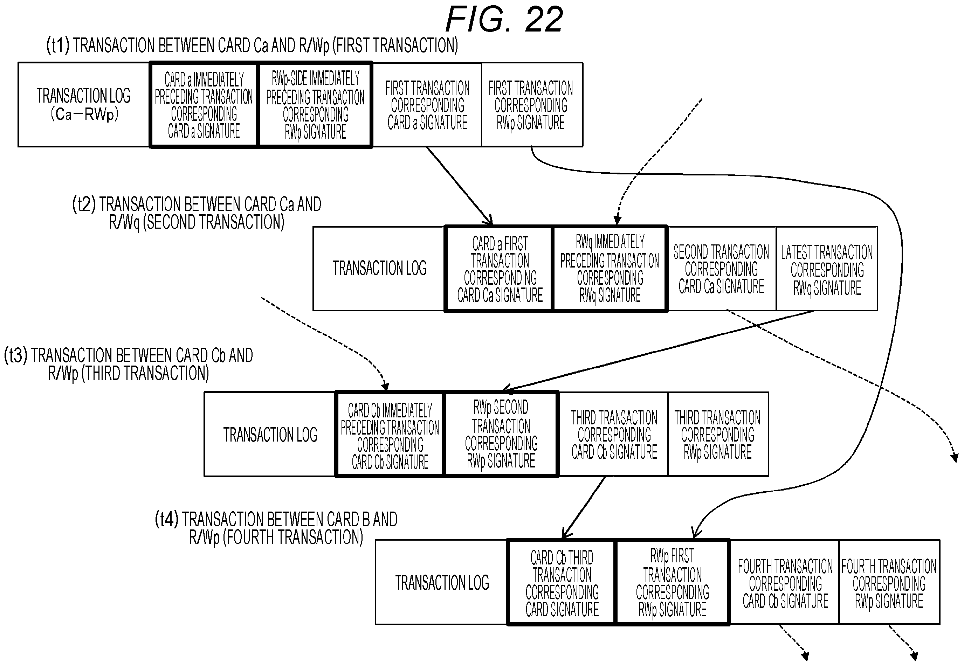

That is, as illustrated in Fig. 22, the signatures corresponding to the individual immediately preceding transactions of the IC card and the reader/writer (R/W) that have executed the transaction corresponding to the transaction log with chain signature are additionally recorded in the transaction log with chain signature.

Moreover, the newly generated signatures of the IC card and the reader/writer (R/W) are additionally recorded in the transaction log with chain signature generated at the time of a new transaction, and these signatures are further recorded in a subsequent log.

As described above, the transaction log with chain signature has a chain configuration in which the signatures of the IC card and the reader/writer (R/W) are set as the signature target data in the next log, and the signature data is connected between logs.

In the signature verification for such a transaction log with chain signature, verification for the signature newly generated in the transaction log with chain signature is performed, and moreover, verification processing as to whether or not the immediately preceding transaction corresponding card signature and reader/writer signature recorded as the signature target data in the transaction log with chain signature match the signatures recorded in the transaction log with chain signature generated at the time of an actual immediately preceding transaction is also executed.

In a case where the signatures do not match, a possibility of falsification in the transaction log with chain signature to be verified is determined, and measures to stop the settlement processing and the like are taken.

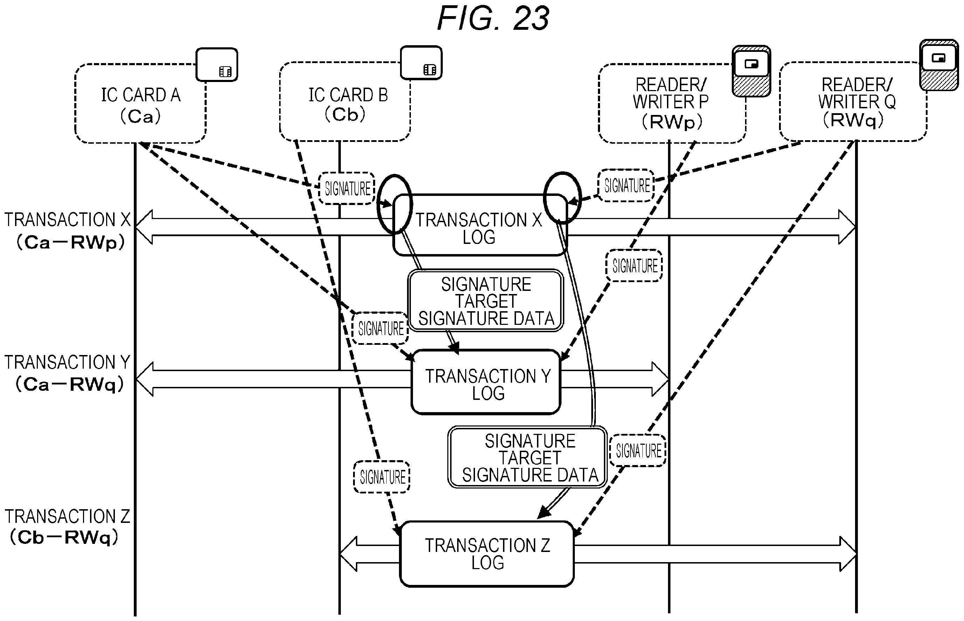

Fig. 23 is a diagram for describing difficulty of data falsification in the case of using a transaction log with chain signature.

Fig. 23 illustrates transactions X, Y, and Z that are three transactions according to a chronological order.

The transaction X is a transaction between the IC card A (Ca) and the reader/writer Q (RWq).

The transaction Y is a transaction between the IC card A (Ca) and the reader/writer P (RWp).

The transaction Z is a transaction between the IC card B (Cb) and the reader/writer Q (RWq).

For example, the transaction log with chain signature generated in the transaction Y is provided with new signature data between the IC card A (Ca) and the reader/writer P (RWp).

Moreover, an immediately preceding transaction corresponding card signature of the IC card A (Ca) and an immediately preceding transaction corresponding reader/writer signature of the reader/writer P (RWp) are recorded as the signature target data.

The immediately preceding transaction corresponding card signature of the IC card A (Ca) is a signature generated by the IC card A (Ca) in the illustrated transaction X.

Furthermore, a transaction log with chain signature generated in the transaction Z is provided with new signature data between the IC card B (Cb) and the reader/writer Q (RWq).

Moreover, an immediately preceding transaction corresponding card signature of the IC card B (Cb) and an immediately preceding transaction corresponding reader/writer signature of the reader/writer Q (RWq) are recorded as the signature target data.

The immediately preceding transaction corresponding reader/writer signature of the reader/writer Q (RWq) is a signature generated by the reader/writer Q (RWq) in the illustrated transaction X.

Fig. 23 illustrates that, as the signature target data in the transaction Y, the IC card A (Ca)-side signature is only the signature generated by the IC card A (Ca) in the transaction X. However, the signature target data in the transaction Y includes a signature generated by the reader/writer P (RWp) in a transaction before the transaction X.

Similarly, the signature target data in the transaction Z includes not only the signature generated by the reader/writer Q (RWq) in the transaction X but also a signature generated by the IC card B (Cb) in a transaction before the transaction X.

For example, when verification establishment is determined in the signature verification processing for an IC card B (ICb) and the reader/writer Q (RWq) of a transaction Z log,
validity (no falsification) of the log data that is the signature target data of the transaction Z log and the immediately preceding signatures of the IC card B (ICb) and the reader/writer Q (RWq) is confirmed.

Moreover, a verifier checks whether or not the immediately preceding transaction corresponding signature of the IC card B (ICb) recorded in the signature target data in the transaction Z log matches a signature acquired from a transaction log with chain signature of an immediately preceding transaction to which the immediately preceding transaction corresponding signature is provided as a new signature.

In a case where the signatures do not match, it is determined that either
the signature target data or the signature of the transaction log Z is falsified, or
a signature or signature target data of an immediately preceding transaction log in which the signature stored as the signature target data in the transaction log Z is recorded for the first time is falsified.

As described above, if a part of data of the transaction log with chain signature is falsified, inconsistency occurs in signatures of a plurality of transaction logs with chain signature, and it is extremely difficult or impossible to falsify data while maintaining the consistency.

That is, by using the transaction log with chain signature, resistance to falsification can be enhanced.

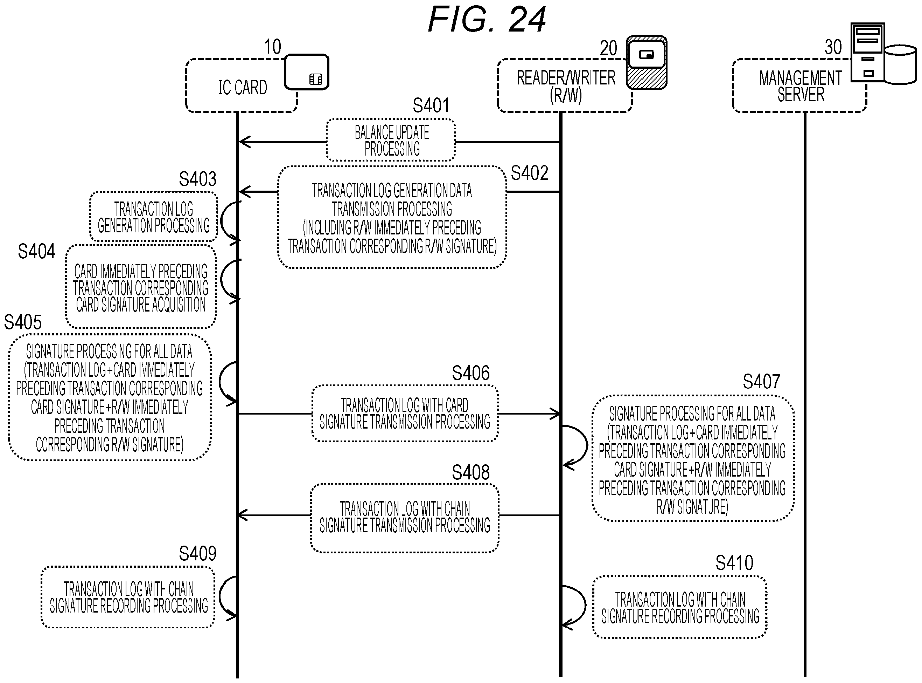

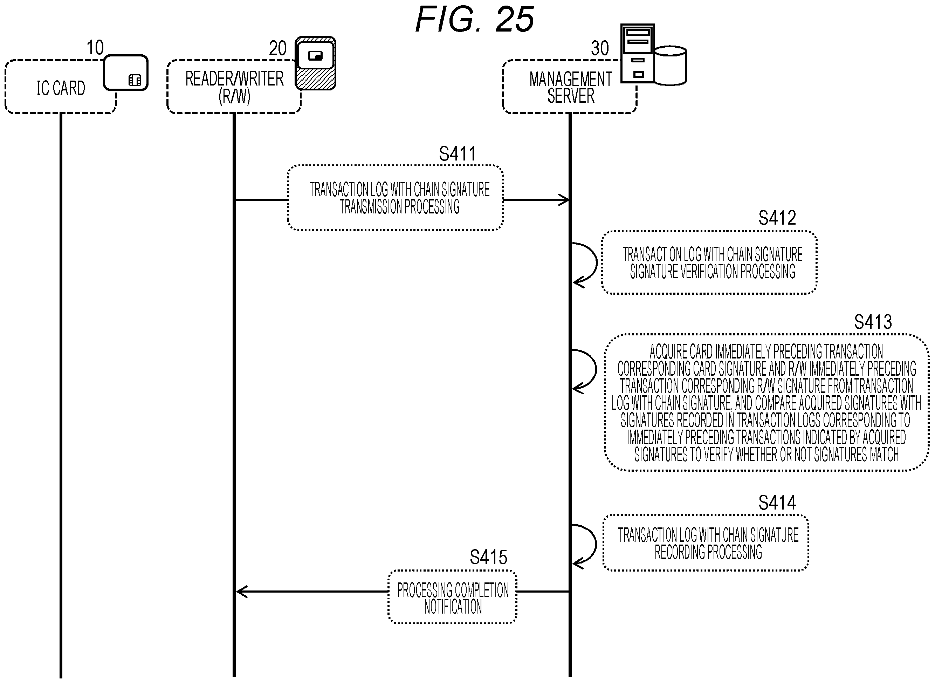

Next, processing sequences of generating, transmitting, and verifying the transaction log with chain signature will be described with reference to Figs. 24 and 25.

Figs. 24 and 25 illustrate the three configuration elements illustrated in Fig. 1 described above, that is, the IC card 10, the reader/writer (R/W) 20, and the management server 30, and chronologically illustrates communication among the devices and processing executed by the devices, similarly to Fig. 1 described above.

Note that transmitted/received data among the devices is favorably encrypted data.

Processing of steps illustrated in Figs. 24 and 25 will be sequentially described.

### (step S401)

First, in step S401, the reader/writer (R/W) 20 performs processing of updating the balance of the IC card 10 according to the transaction amount.

Note that, in the balance update processing, the IC card 10 and the reader/writer (R/W) 20 perform the authentication processing for confirming mutual validity. The balance update processing is executed on condition that the authentication is established.

### (step S402)

Next, in step S402, the reader/writer (R/W) 20 transmits transaction log generation data to the IC card 10.

The transaction log includes, for example, the following data, as described with reference to Fig. 3 above:
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20.

Among the data (a) to (f), for example, these pieces of data:
(c) the identifier (ID) of the IC card 10 that has executed the transaction, and
(d) the transaction total number of the IC card 10 that has executed the transaction
are held by the IC card itself. The other data that are not held by the IC card 10 are received from the reader/writer (R/W) 20.

Moreover, in the present example, the reader/writer (R/W) 20 transmits a reader/writer signature corresponding to an immediately preceding transaction before this transaction to the IC card 10 as transaction log generation data.

This data is data corresponding to the "reader/writer (R/W)-side immediately preceding transaction corresponding reader/writer (R/W) signature 303" recorded in the transaction log with chain signature 300 illustrated in Fig. 15 described above.

The reader/writer signature corresponding to an immediately preceding transaction is stored in the storage unit of the reader/writer (R/W) 20.

### (step S403)

Next, in step S403, the IC card 10 generates a transaction log.

The transaction log generated by the IC card 10 includes the following data.
(a) the transaction date and time,
(b) the transaction amount,
(c) the identifier (ID) of the IC card 10 that has executed the transaction,
(d) the transaction total number of the IC card 10 that has executed the transaction,
(e) the identifier of the reader/writer (R/W) 20, and
(f) the transaction total number of the reader/writer (R/W) 20.

### (step S404)

Moreover, in step S404, the IC card 10 acquires the card signature set to a log generated in an immediately preceding transaction before this transaction by the IC card 10.

This data is data corresponding to the "card-side immediately preceding transaction corresponding card signature 302" recorded in the transaction log with chain signature 300 illustrated in Fig. 15 described above.

The card signature corresponding to an immediately preceding transaction is stored in the storage unit of the IC card 10.

### (step S405)

Next, in step S405, the IC card 10 performs
a signature (IC card signature) using
the "log data" generated in step S403,
the "reader/writer (R/W)-side immediately preceding transaction corresponding reader/writer (R/W) signature" acquired from the reader/writer 20, and
the "card-side immediately preceding transaction corresponding card signature" acquired from the storage unit of the IC card 10
as the signature target data.

This signature data is data corresponding to the "card signature 304" recorded in the transaction log with chain signature 300 illustrated in Fig. 15 described above.

### (step S406)

Next, in step S406, the IC card 10 transmits the transaction log with IC card signature to the reader/writer (R/W) 20.

### (step S407)

Next, in step S407, the reader/writer (R/W) 20 provides the signature (reader/writer (R/W) signature) to the transaction log with card signature received from the IC card 10. The signature target data are
the "log data" generated by the IC card 10 in step S403,
the "reader/writer (R/W)-side immediately preceding transaction corresponding reader/writer (R/W) signature", and
the "card-side immediately preceding transaction corresponding card signature" of the IC card 10.

The reader/writer (R/W) 20 performs a signature (reader/writer (R/W) signature) using the above data as the signature target data.

This signature data is data corresponding to "reader/writer signature 305" recorded in the transaction log with chain signature 300 illustrated in Fig. 15 described above.

By the signature processing, the "transaction log with chain signature 300" described above with reference to Fig. 15 and the like is generated.

### (step S408)

Next, in step S408, the reader/writer (R/W) 20 transmits the transaction log with chain signature to the IC card 10.

### (steps S409 and S410)

In steps S409 and S410, the IC card 10 and the reader/writer (R/W) 20 store the transaction log with chain signature in the respective storage units (memories).

### (step S411)

Next, in step S411, the reader/writer (R/W) 20 transmits the transaction log with chain signature to the management server 30.

Note that, in a case where the IC card 10 has a configuration capable of communication via a network such as a smartphone, for example, the IC card 10 itself may directly transmit the transaction log with chain signature to the management server 30.

Furthermore, each of the reader/writer (R/W) 20 and the IC card 10 may be set to transmit the same log to the management server 30.

### (step S412)

In step S412, when receiving the transaction log with chain signature from the reader/writer (R/W) 20, the management server 30 executes signature verification processing for the transaction log with chain signature.

The signature verification processing is executed for the two signatures set to the transaction log with chain signature, that is, the card signature and the reader/writer (R/W) signature.

The signature verification processing according to the public key cryptographic system described with reference to Fig. 6(1b) above is executed in a case where the signature is a signature according to the public key cryptographic system.

Meanwhile, the signature verification processing according to the common key cryptographic system described with reference to Fig. 7(2b) above is executed in a case where the signature is a signature according to the common key cryptographic system.

In a case where both the two signature verifications are established, that is, no data falsification for the log information is determined, moreover,
signature matching processing as to whether or not
the "card-side immediately preceding transaction corresponding card signature" recorded as the signature target data of the transaction log with chain signature matches
a "card signature of a transaction log with chain signature corresponding to a card-side immediately preceding transaction to which the above card signature is provided as a new signature"
is executed.

Furthermore, signature matching processing as to whether or not
the "reader/writer-side immediately preceding transaction corresponding reader/writer signature" recorded as the signature target data of the transaction log with chain signature matches
a "reader/writer signature of a transaction log with chain signature corresponding to a reader/writer-side immediately preceding transaction to which the above reader/writer signature is provided as a new signature"
is executed.

In a case where verification of the two signatures set to the transaction log with chain signature, that is, verification of the card signature and the reader/writer (R/W) signature is established, and moreover, matching established is determined in the above two pieces of signature matching processing, the processing proceeds to next step S414.

On the other hand, in a case where at least one of the two signature verifications is not established, or in a case where verification of at least one of the above-described two pieces of signature matching processing is not established, data falsification for the log information is determined, and the processing is stopped without proceeding to next step S414. In this case, for example, the management server 30 may notify the reader/writer (R/W) 20 of an error message.

### (step S414)

In step S413, In a case where verification of the two signatures set to the transaction log with chain signature, that is, verification of the card signature and the reader/writer (R/W) signature is established, and moreover, matching established is determined in the above two pieces of signature matching processing, no data falsification of the log information is determined and the processing proceeds to next step S414.

In step S414, the management server 30 stores the transaction log with chain signature received from the reader/writer (R/W) 20 in the database.

### (step S415)

Next, in step S415, the management server 30 transmits the processing completion notification to the reader/writer 20.

A transaction, generation of a transaction log, and database storage processing using the IC card 10 are performed according to this sequence.

The management server 30 performs the actual settlement processing, for example, the settlement processing of moving a transaction amount from an account of the owner user 11 of the IC card 10 to an account of the shop 21 or the like on the basis of the transaction log information stored in the database. Alternatively, in some cases, the management server 30 notifies another settlement server of transaction information based on the log information, and the settlement server performs the settlement processing.

In the present example, generation of a transaction log is executed by the IC card 10. Moreover, the transaction log with chain signature to which both the IC card 10 and the reader/writer (R/W) 20 have set the signatures is generated using data obtained by including the signature of the immediately preceding transaction log of the IC card 10 and the signature data of the immediately preceding transaction log of the reader/writer (R/W) 20 in the transaction log information as the signature target data.

The management server 30 receives the transaction log with chain signature and performs two signature verifications for the IC card 10 and the reader/writer (R/W) 20.

Moreover, the signature matching processing as to whether or not the "card-side immediately preceding transaction corresponding card signature" matches the "card signature of a transaction log with chain signature corresponding to a card-side immediately preceding transaction to which the above card signature is provided as a new signature" is executed.

Furthermore, the signature matching processing as to whether or not the "reader/writer-side immediately preceding transaction corresponding reader/writer signature" recorded as the signature target data of the transaction log with chain signature matches the "reader/writer signature of a transaction log with chain signature corresponding to a reader/writer-side immediately preceding transaction to which the above reader/writer signature is provided as a new signature" is executed.

In a case where all the signature verification processing and the signature matching processing are established, the transaction log is determined to be valid without being falsified.

In this example, falsification of the transaction log is extremely difficult, and validity of the log can be more reliably maintained.

### [6. (Example 5) Processing example in a case where a plurality of management systems to which signatures according to different cryptographic systems are applied coexists]

Next, a processing example in a case where a plurality of management systems to which signatures according to different cryptographic systems are applied coexists will be described as Example 5.

As described in Examples 1 to 4, the signatures of the IC card and the reader/writer (R/W) are set to the transaction log, and the management server verifies these signatures.

The signature verification processing requires a verification key.

The signature verification processing according to the public key cryptographic system described with reference to Fig. 6(1b) above is executed in a case where the signature is a signature according to the public key cryptographic system.

Meanwhile, the signature verification processing is executed as signature verification processing according to the common key cryptographic system described with reference to Fig. 7(2b) above in a case where the signature is a signature according to the common key cryptographic system.

In the signature verification processing according to the public key cryptographic system, a public key that is a key basically open to the public can be used.

However, in the signature verification processing according to the common key cryptographic system, it is necessary to perform signature verification processing to which a common key not open to the public, that is, a common key held by only a signature generator selected in advance and a signature verifier is applied.

A server that does not hold the common key cannot perform signature verification processing using the common key.

Therefore, in a configuration in which a plurality of transaction management systems exists, and management servers that perform the signature verification processing in the respective transaction management systems individually exist, the following problem occurs.

In a case where an IC card or a reader/writer on a management system A side that allows a signature to which a common key is applied performs a signature to which the common key is applied, the management server on a management system B side not holding the common key cannot perform signature verification.

A configuration that solves this problem is Example 5 to be described below.

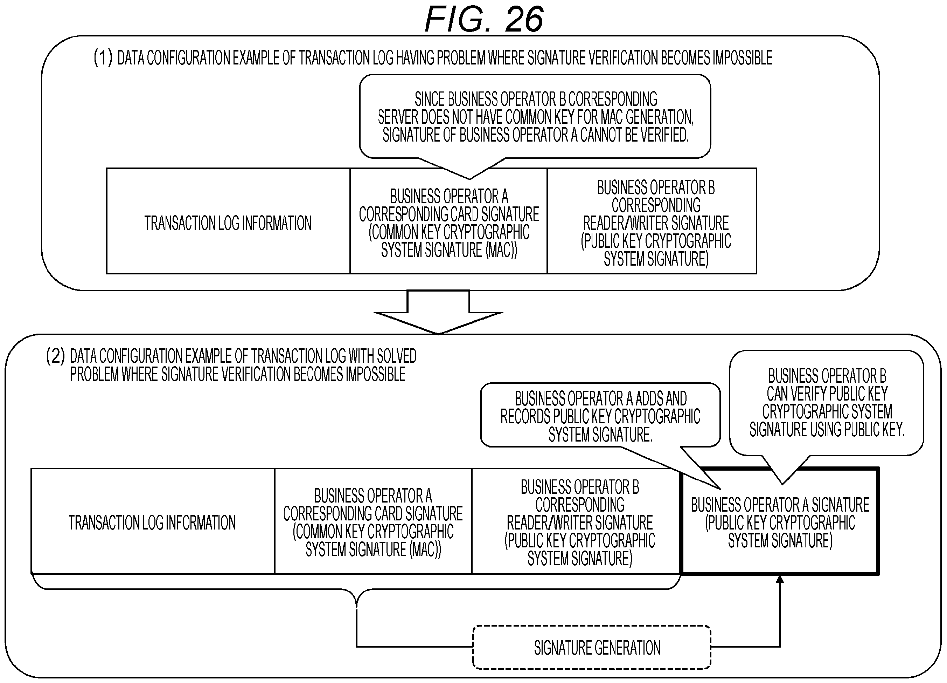

An example of a transaction log in which the problem occurs and a configuration example of a transaction log having a configuration that solves the problem will be described with reference to Fig. 26.

Fig. 26 illustrates the following two data configuration examples:
(1) a data configuration example of a transaction log having a problem that a signature verification becomes impossible, and
(2) a data configuration example of a transaction log that has solved the problem that a signature verification becomes impossible.

The data configuration example of a transaction log having a problem that a signature verification becomes impossible illustrated in Fig. 26(1) includes the following data:
(a) transaction log information,
(b) a business operator A corresponding card signature (common key cryptographic system signature (MAC)), and
(c) a business operator B corresponding reader/writer signature (public key cryptographic system signature).

This transaction log data is transaction log data generated in a case where a user who holds an IC card corresponding to the business operator A shops at a shop that owns a reader/writer corresponding to the business operator B.

The business operator A adopts a system for performing a signature in the common key cryptographic system, and all of an IC card, a reader/writer (R/W), and a management server belonging to a group of the business operator A hold a common key to be applied to signature generation and verification.

However, the business operator B adopts a system for performing a signature in the public key cryptographic system, and all of an IC card, a reader/writer (R/W), and a management server belonging to a group of the business operator B do not hold the common key held by the devices on the business operator A side.

Therefore, for the "business operator A corresponding card signature (common key cryptographic system signature (MAC))" included in the log data illustrated in Fig. 26(1), the management server on the business operator B side cannot perform the signature verification processing.

A configuration that solves this problem is the data configuration example of a transaction log that solves the problem that a signature verification becomes impossible illustrated in Fig. 26(2). This log data includes the following data:
(a) the transaction log information,
(b) the business operator A corresponding card signature (common key cryptographic system signature (MAC)), and
(c) the business operator B corresponding reader/writer signature (public key cryptographic system signature), and
(d) a business operator A management server signature (public key cryptographic system signature).

This transaction log data has a configuration in which the signature data of
(d) the business operator A management server signature (public key cryptographic system signature)
is added to the data illustrated in Fig. 26(1).

First, the management server of the business operator A executes a signature verification for the log data illustrated in Fig. 26(1).

That is, the management server of the business operator A executes verification processing for the following two signatures:
(b) the business operator A corresponding card signature (common key cryptographic system signature (MAC)), and
(c) the business operator B corresponding reader/writer signature (public key cryptographic system signature).

The management server of the business operator A holds the common key, and the public key is a key open to the public and can be acquirable by anyone. Therefore, the management server can verify the two signatures.

In a case where the management server of the business operator A executes verification processing for the following two signatures
(b) the business operator A corresponding card signature (common key cryptographic system signature (MAC)), and
(c) the business operator B corresponding reader/writer signature (public key cryptographic system signature),
   and the two signature verifications are established, and no falsification of the log data is determined,
(d) the management server of the business operator A performs a signature in the public key cryptographic system.

Note that a secret key required for generating a signature in the public key cryptographic system applied by the business operator B is provided in advance to the management server of the business operator A.

By generating log data having the data illustrated in Fig. 26(2), that is,
(a) the transaction log information,
(b) the business operator A corresponding card signature (common key cryptographic system signature (MAC)),
(c) the business operator B corresponding reader/writer signature (public key cryptographic system signature), and
(d) the business operator A management server signature (public key cryptographic system signature),
the management server of the business operator B on the business operator B that does not have the common key performs signature verifications of the following two signatures:
(c) the business operator B corresponding reader/writer signature (public key cryptographic system signature), and
(d) the business operator A management server signature (public key cryptographic system signature),
   thereby determining the validity (presence or absence of falsification) of the log data.

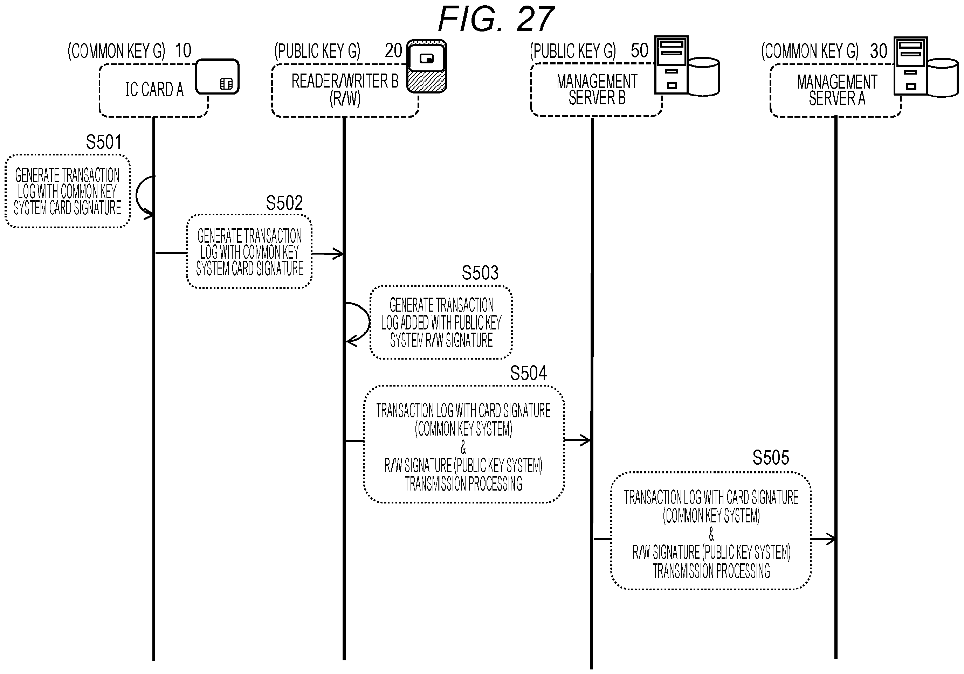

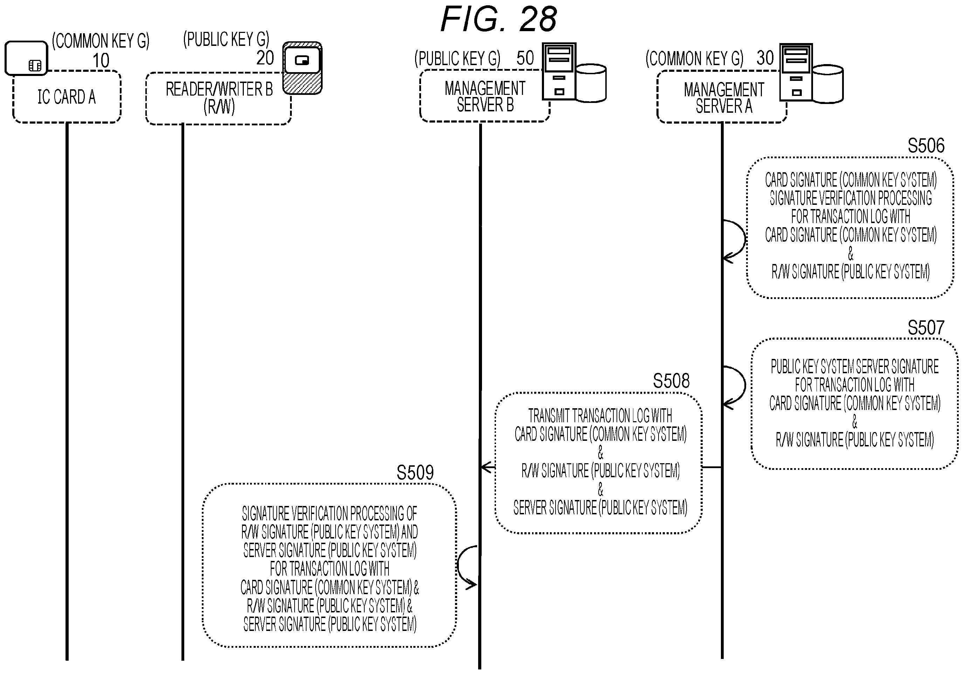

Next, transaction log generation and verification sequences in present Example 5 will be described with reference to the sequence diagrams illustrated in Figs. 27 and 28.

Figs. 27 and 28 illustrate the following four devices from the left.

An IC card A 10, a reader/writer B (R/W) 20, a management server B 50, and a management server A 30 are illustrated.

The IC card A 10 and the management server A 30 belong to a common key applied group (common key G) that performs signature generation and verification applying a common key.

Meanwhile, the reader/writer B (R/W) 20 and the management server B 50 belong to a public key applied group (public key G) that performs signature generation and verification applying a public key and a secret key.

The sequence diagrams illustrated in Figs. 27 and 28 illustrate communication among the devices and processing chronologically executed by the devices.

Note that transmitted/received data among the devices is favorably encrypted data.

Processing of steps illustrated in Figs. 27 and 28 will be sequentially described.

Note that it is assumed that a transaction has been executed among the IC card A 10 and the reader/writer B (R/W) 20 before step S501.

### (step S501)

In step S501, the IC card A 10 generates a transaction log in which a card signature is set.

The transaction log generated by the IC card A 10 includes the data described with reference to Fig. 3 above, that is, the following data:
(a) transaction date and time,
(b) a transaction amount,
(c) an identifier (ID) of the IC card 10 that has executed the transaction,
(d) a transaction total number of the IC card 10 that has executed the transaction,
(e) an identifier of the reader/writer (R/W) 20, and
(f) a transaction total number of the reader/writer (R/W) 20.

The IC card A 10 performs signature (MAC) generation processing applying the common key, using the data (a) to (f) as signature target data.

### (step S502)

Next, in step S502, the IC card A 10 transmits the transaction log with card signature to the reader/writer (R/W) B 20.

### (step S503)

Next, in step S503, the reader/writer (R/W) B 20 provides the signature (reader/writer (R/W) signature) to the transaction log with card signature received from the IC card A 10.

The signature is a signature according to the public key cryptographic system, and is a signature to which the secret key is applied.

The signature target data is transaction log configuration data.

By the signature processing, the transaction log data described with reference to Fig. 26(1) above is generated.

### (step S504)

Next, in step S504, the reader/writer (R/W) B 20 transmits a transaction log with card signature (common key system) & reader/writer (RW) signature (public key system) to the management server B 50 of group B that is the same business operator group as the reader/writer (R/W) B 20.

### (step S505)

When receiving the transaction log with card signature (common key system) & reader/writer (RW) signature (public key system) from the reader/writer (R/W) B 20, the management server B 50 checks that the signature (card signature (common key system)) in the common key cryptographic system that cannot be verified is included in the log, and transfers the log data to the management server A 30 of group A that is a business operator group that executes a signature verification in the common key cryptographic system on the basis of the check.

### (step S506)

In step S506, the management server A 30 executes the signature verification processing for the transaction log with card signature (common key system) & reader/writer (RW) signature (public key system) received from the management server B 50.

The management server A 30 executes the signature verification processing applying the common key for the card signature (common key system) and executes a signature verification processing applying the public key for the reader/writer (RW) signature (public key system).

In a case where both the two signature verifications are established, that is, no data falsification for the log information is determined, the processing proceeds to next step S507.

On the other hand, in a case where at least one of the two signature verifications is not established, data falsification for the log information is determined, and the processing is stopped without proceeding to next step S507. In this case, for example, the management server B or 50 may notify the reader/writer (R/W) B or 20 of an error message.

### (step S507)

In a case where the two signature verifications executed in step S506 are established, and no data falsification for the log information is determined, the processing proceeds to next step S507.

In step S507, the management server A 30 performs a signature (management server A signature) according to the public key cryptographic system, for the "transaction log with card signature (common key system) & reader/writer (RW) signature (public key system)" received from the reader/writer (R/W) B 20.

The management server A 30 has acquired the secret key for performing a signature according to the public key cryptographic system in advance, and executes a signature applying the secret key.

By the signature processing, the log data illustrated in Fig. 26(2) is generated. That is, a "transaction log with card signature (common key system) & reader/writer (RW) signature (public key system) & server signature (public key system)" is generated.

### (step S508)

Next, in step S508, the management server A 30 transmits the "transaction log with card signature (common key system) & reader/writer (RW) signature (public key system) & server signature (public key system)" generated in step S507 to the management server B 50.

### (step S509)

Next, in step S509, the management server B 50 executes the signature verification processing for the reader/writer (RW) signature and the server signature (public key system) according to the public key cryptographic system included in the "transaction log with card signature (common key system) & reader/writer (RW) signature (public key system) & server signature (public key system)" received from the management server A 30 in step S508.

In a case where these two signature verifications are established, no falsification of the log data is determined.

The management server B 50 performs actual settlement processing, for example, settlement processing of moving a transaction amount from an account of an owner user of the IC card A 10 to an account of a shop of the reader/writer B 20 on the basis of the transaction log information. Alternatively, in some cases, the management server 30 notifies another settlement server of transaction information based on the log information, and the settlement server performs the settlement processing.

As described above, by applying the configuration of the present example, the management server that does not hold the common key can verify the signature of the log data and can reliably confirm the presence or absence of falsification of the log data.

### [7. Hardware configuration example of information processing apparatus]

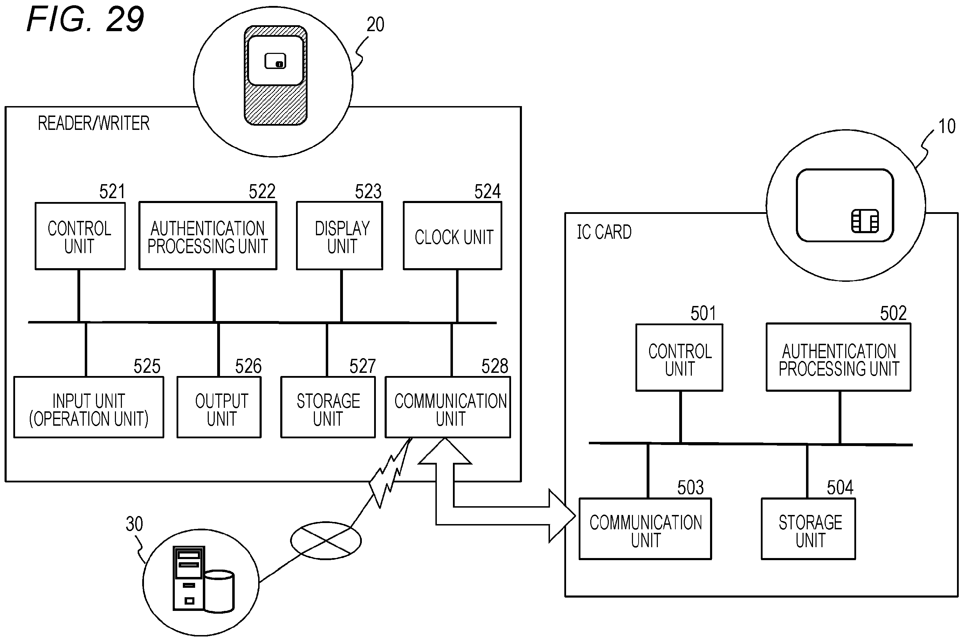

Next, a hardware configuration example of each information processing apparatus constituting the information processing system according to the present disclosure will be described with reference to Fig. 29.

Fig. 29 is a block diagram illustrating a configuration example of the IC card 10 used by the user and the reader/writer 20.

The IC card 10 includes a control unit 501, an authentication processing unit 502, a communication unit 503, and a storage unit 504.

The control unit 501 executes control of data processing executed in the IC card 10, such as integral control of various types of processing executed by respective functional units and data transmission/reception control. The control unit 501 includes a CPU having a program execution function, and executes processing according to a program stored in the storage unit 504, and the like.

For example, the control unit 501 performs processing according to the above-described sequence and the like.

Specifically, for example, the control unit 501 performs control regarding the communication with the reader/writer 20 and the settlement processing, and executes the log generation, the signature generation processing, and the like.

The authentication processing unit 502 performs the authentication processing. Specifically, the authentication processing unit 502 executes the authentication processing performed at the time of communication with the reader/writer 20.

The communication unit 503 is a communication unit that performs the communication with the reader/writer 20. Moreover, the communication unit 503 may be set as a communication unit capable of communication with the server 30.

The storage unit 504 includes a RAM, a ROM, and the like.

The storage unit 504 is used as a storage area for various data. For example, the storage unit 504 is used as a storage area for log data and signature keys. Moreover, the storage unit 504 is also used as a storage area for the program executed by the control unit 501, a storage area for, for example, parameters applied to the data processing executed by the control unit 501, and a work area.

Next, the configuration of the reader/writer 20 will be described. The reader/writer 20 includes a control unit 521, an authentication processing unit 522, a display unit 523, a clock unit 524, an input unit (operation unit) 525, an output unit 526, a storage unit 527, and a communication unit 528.

The control unit 521 executes control of data processing executed in the reader/writer 20, such as integral control of various types of processing executed by respective functional units and data transmission/reception control. The control unit 521 includes a CPU having a program execution function, and executes processing according to a program stored in the storage unit 527, and the like.

For example, processing according to the above-described sequence and the like are performed.

Specifically, for example, the control unit 521 performs control regarding the communication with the IC card 10 and the settlement processing, and executes the log generation, the signature generation processing, and the like.

The authentication processing unit 522 performs the authentication processing. Specifically, the authentication processing unit 522 executes the authentication processing performed at the time of communication with the IC card 10 or the management server 30.

The display unit 523 also functions as display processing for various types of information or a touch panel input unit.

The clock unit 524 includes a clock function indicating current date and time information, a timer function to measure an elapsed time from a certain set time, and the like, for example.

The input unit 525 is an input unit that can be operated by the user, and is for performing various operation instructions and the like. A touch panel display unit is also a part of the input unit.

The output unit 526 includes an output unit for an image output, a sound output, and external devices, and the like. The display unit 523 is also one of configuration elements of the output unit 526.

The storage unit 527 includes a RAM, a ROM, other recording media, and the like.

The storage unit 527 is used as a storage area for various data. For example, the storage unit 527 is used as a storage area for log data and signature keys. Moreover, the storage unit 527 is also used as a storage area for the program executed by the control unit 521, a storage area for, for example, parameters applied to the data processing executed by the control unit 521, and a work area.

The communication unit 528 is a communication unit that executes communication with the IC card 10, and an external device such as an external server such as the management server 30.

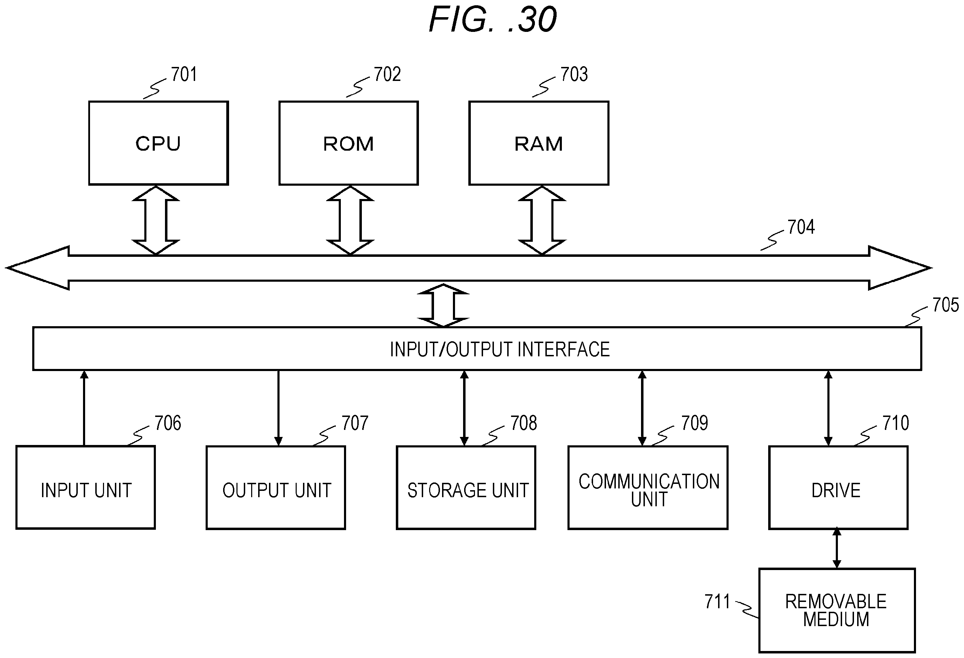

Next, a hardware configuration example of an information processing apparatus usable as a server constituting the information processing system according to the present disclosure will be described with reference to Fig. 30.

Note that, in a case of a configuration in which the IC card function is built in a user device such as a smartphone, the hardware configuration of the smartphone can be a similar configuration to the configuration illustrated in Fig. 30.

The configuration illustrated in Fig. 30 will be described.

A central processing unit (CPU) 701 functions as a control unit and a data processing unit that execute various types of processing according to a program stored in a read only memory (ROM) 702 or a storage unit 708. For example, the CPU 701 executes processing according to the sequence described in the above example. A random access memory (RAM) 703 stores the program executed by the CPU 701, data, and the like. These CPU 701, ROM 702, and RAM 703 are mutually connected by a bus 704.

The CPU 701 is connected to an input/output interface 705 via the bus 704, and an input unit 706 including various switches, a keyboard, a mouse, a microphone and the like, and an output unit 707 including a display, a speaker, and the like are connected to the input/output interface 705. The CPU 701 executes various types of processing corresponding to commands input from the input unit 706, and outputs processing results to the output unit 707, for example.

The storage unit 708 connected to the input/output interface 705 includes, for example, a flash memory, a hard disk and the like, and stores the program executed by the CPU 701 and various data. A communication unit 709 functions as a transmission/reception unit for Wi-Fi communication, Bluetooth (registered trademark) (BT) communication, or another data communication via a network such as the Internet or a local area network, and communicates with an external device.

A drive 710 connected to the input/output interface 705 drives a removable medium 711 such as a magnetic disk, an optical disk, a magneto-optical disk, or a semiconductor memory such as a memory card, and executes data recording or reading.

### [8. Conclusion of Configurations of Present Disclosure]

The examples of the present disclosure have been described in detail with reference to the specific examples. However, it is obvious that those skilled in the art can make modifications and substitutions of the examples without departing from the gist of the present disclosure. That is, the present invention has been disclosed in the form of exemplification, and should not be restrictively interpreted. To judge the gist of the present disclosure, the scope of claims should be taken into consideration.

Note that the technology disclosed in the present specification can have the following configurations.
(1) An information processing apparatus that is a first information processing apparatus configured to execute communication with a second information processing apparatus, the information processing apparatus including:
   a control unit configured to execute communication with the second information processing apparatus to generate a transaction log, in which
   the control unit
   receives log configuration information necessary for generating the transaction log from the second information processing apparatus,
   generates the transaction log, using received data, and
   executes signature processing for the generated transaction log to generate a transaction log with card signature, and transmits the generated transaction log with card signature to the second information processing apparatus or a management server.
(2) The information processing apparatus according to (1), in which
   the control unit
   receives a second information processing apparatus identifier and a second information processing apparatus corresponding transaction total number from the second information processing apparatus as the log configuration information.
(3) The information processing apparatus according to (1) or (2), in which
   the control unit
   executes the signature processing for a transaction log including transaction date and time, a transaction amount, a first information processing apparatus identification number, a first information processing apparatus corresponding transaction total number, a second information processing apparatus identifier, and a second information processing apparatus corresponding transaction total number to generate a transaction log with card signature.
(4) The information processing apparatus according to any one of (1) to (3), in which
   the first information processing apparatus is an IC card or a portable terminal having an IC card function, and
   the second information processing apparatus is a reader/writer.
(5) The information processing apparatus according to any one of (1) to (4), in which
   the first information processing apparatus includes
   a storage unit configured to store a transaction log with card signature generated in a past, and
   the control unit
   transmits transaction log with card signature history data including a generated new transaction log with card signature and the past transaction log with card signature acquired from the storage unit to the second information processing apparatus or the management server.
(6) An information processing system including: a first information processing apparatus and a second information processing apparatus, in which
   the first information processing apparatus
   receives log configuration information necessary for generating a transaction log from the second information processing apparatus,
   generates the transaction log, using received data, and
   executes signature processing for the generated transaction log to generate a transaction log with card signature, and transmits the generated transaction log with card signature to the second information processing apparatus, and
   the second information processing apparatus
   executes signature processing for transaction log data included in the transaction log with card signature received from the first information processing apparatus to generate a transaction log with card signature and reader/writer signature, and transmits the transaction log with card signature and reader/writer signature to a management server.
(7) The information processing system according to (6), in which
   the management server
   executes signature verifications for a card signature and for a reader/writer signature set to the transaction log with card signature and reader/writer signature received from the second information processing apparatus, and determines that the generated transaction log is valid on condition that the two signature verifications are established.
(8) The information processing system according to (6) or (7), in which
   the transaction log with card signature and reader/writer signature is
   transaction log data including transaction date and time, a transaction amount, a first information processing apparatus identification number, a first information processing apparatus corresponding transaction total number, a second information processing apparatus identifier, and a second information processing apparatus corresponding transaction total number, and
   data including a card signature by the first information processing apparatus and a reader/writer signature by the second information processing apparatus, for the transaction log.
(9) The information processing system according to any one of (6) to (8), in which
   the second information processing apparatus
   transmits the transaction log with card signature and reader/writer signature to the first information processing apparatus, and
   the first information processing apparatus
   transmits transaction log with card signature and reader/writer signature history data including the transaction log with card signature and reader/writer signature received from the second information processing apparatus and a past transaction log with card signature and reader/writer signature acquired from a storage unit to the second information processing apparatus or the management server.
(10) An information processing apparatus that is a first information processing apparatus configured to execute communication with a second information processing apparatus, the information processing apparatus including:
   a control unit configured to execute communication with the second information processing apparatus to generate a transaction log, in which
   the control unit
   receives log configuration information necessary for generating the transaction log from the second information processing apparatus,
   generates the transaction log, using received data, and
   executes new signature processing for data including the generated transaction log and signature data corresponding to an immediately preceding past transaction before the generation of the transaction log to generate a transaction log with chain signature, and transmits the generated transaction log with chain signature to the second information processing apparatus or a management server.
(11) The information processing apparatus according to (10), in which
   the control unit
   receives a second information processing apparatus-side immediately preceding transaction corresponding reader/writer signature from the second information processing apparatus, and
   executes new signature processing for data including the generated transaction log, signature data of the information processing apparatus corresponding to an immediately preceding past transaction before the generation of the transaction log, and the second information processing apparatus-side immediately preceding transaction corresponding reader/writer signature to generate the transaction log with chain signature.
(12) An information processing system including: a first information processing apparatus and a second information processing apparatus, in which
   the first information processing apparatus
   receives log configuration information necessary for generating a transaction log and a second information processing apparatus-side immediately preceding transaction corresponding reader/writer signature from the second information processing apparatus, and
   executes new card signature processing for following data (a) to (c):
   (a) a transaction log generated using received data,
   (b) a first information processing apparatus-side immediately preceding transaction corresponding card signature, and
   (c) the second information processing apparatus-side immediately preceding transaction corresponding reader/writer signature,
   and transmits a transaction log to which generated signature data is added to the second information processing apparatus, and
   the second information processing apparatus
   executes new reader/writer signature processing for the following data (a) to (c):
   (a) the transaction log,
   (b) the first information processing apparatus-side immediately preceding transaction corresponding card signature, and
   (c) the second information processing apparatus-side immediately preceding transaction corresponding reader/writer signature
   included in received data from the first information processing apparatus
   to generate a transaction log with chain signature, and
   transmits the generated transaction log with chain signature to a management server.
(13) The information processing system according to (12), in which
   the first information processing apparatus and the second information processing apparatus
   store a transaction log with chain signature corresponding to a past transaction in a storage unit, and
   in generating a new transaction log with chain signature, acquire a signature from a transaction log with chain signature corresponding to an immediately preceding transaction stored in the storage unit, and set the acquired signature as signature target data of the new transaction log with chain signature.
(14) The information processing system according to (12) or (13), in which
   the management server
   executes signature verifications for a card signature and for a reader/writer signature included in the received transaction log with chain signature, and moreover,
   executes matching processing between following signatures:
   (1) a first information processing apparatus-side immediately preceding transaction corresponding card signature, and
   (2) a second information processing apparatus-side immediately preceding transaction corresponding reader/writer signature
   included in signature target data of the card signature and the reader/writer signature, and signatures of a past transaction log with chain signature in which the above signatures (1) and (2) are set.
(15) An information processing method executed in a first information processing apparatus that executes communication with a second information processing apparatus,
   the first information processing apparatus including
   a control unit configured to execute the communication with the second information processing apparatus to generate a transaction log,
   the information processing method including:
   by the control unit,
   receiving log configuration information necessary for generating the transaction log from the second information processing apparatus;
   generating the transaction log, using received data; and
   executing signature processing for the generated transaction log to generate a transaction log with card signature, and transmitting the generated transaction log with card signature to the reader/writer or a management server.
(16) An information processing method executed in a first information processing apparatus that executes communication with a second information processing apparatus,
   the first information processing apparatus including
   a control unit configured to execute communication with the second information processing apparatus to generate a transaction log,
   the information processing method including:
   by the control unit,
   receiving log configuration information necessary for generating the transaction log from the second information processing apparatus;
   generating the transaction log, using received data; and
   executing new signature processing for data including the generated transaction log and signature data corresponding to an immediately preceding past transaction before the generation of the transaction log to generate a transaction log with chain signature, and transmitting the generated transaction log with chain signature to the second information processing apparatus or a management server.
(17) A program for causing a first information processing apparatus that executes communication with a second information processing apparatus to execute information processing,
   the first information processing apparatus including
   a control unit configured to execute the communication with the second information processing apparatus to generate a transaction log,
   the program for causing the control unit to execute:
   processing of receiving log configuration information necessary for generating the transaction log from the second information processing apparatus;
   processing of generating the transaction log, using received data;
   processing of executing signature processing for the generated transaction log to generate a transaction log with card signature; and
   processing of transmitting the generated transaction log with card signature to the second information processing apparatus or a management server.
(18) A program for causing a first information processing apparatus that executes communication with a second information processing apparatus to execute information processing,
   the first information processing apparatus including
   a control unit configured to execute the communication with the second information processing apparatus to generate a transaction log,
   the program for causing the control unit to execute:
   processing of receiving log configuration information necessary for generating the transaction log from the second information processing apparatus;
   processing of generating the transaction log, using received data;
   processing of executing new signature processing for data including the generated transaction log and signature data corresponding to an immediately preceding past transaction before the generation of the transaction log to generate a transaction log with chain signature; and
   processing of transmitting the generated transaction log with chain signature to the second information processing apparatus or a management server.

Furthermore, the series of processing described in the description can be executed by hardware, software, or a combined configuration of the hardware and software. In the case of executing the processing by software, a program, in which the processing sequence is recorded, can be installed in a memory of a computer incorporated in dedicated hardware and executed by the computer, or the program can be installed in and executed by a general-purpose computer capable of executing various types of processing. For example, the program can be recorded in the recording medium in advance. Other than the installation from the recording medium to the computer, the program can be received via a network such as a local area network (LAN) or the Internet and installed in a recording medium such as a built-in hard disk.

Note that the various types of processing described in the description may be executed not only in chronological order as described but also in parallel or individually depending on the processing capability of the device that executes the process or as required. Furthermore, the system in the present description is a logical aggregate configuration of a plurality of devices, and is not limited to devices having respective configurations within the same housing.

### INDUSTRIAL APPLICABILITY

As described above, according to the configuration of one example of the present disclosure, a configuration of preventing a fraud regarding a transaction log regarding a transaction between an IC card and a reader/writer is implemented.

Specifically, for example, the IC card receives log configuration information necessary for generating a transaction log from the reader/writer, generates the transaction log using the received data, executes signature processing for the generated transaction log to generate a transaction log with card signature, and transmits the generated transaction log with card signature to the reader/writer. Moreover, the IC card generates a transaction log with chain signature obtained by performing a new signature using an IC card-side immediately preceding transaction corresponding card signature and a reader/writer-side immediately preceding transaction corresponding reader/writer signature as signature target data, and transmits the transaction log with chain signature to the management server.

With the present configuration, a configuration of preventing a fraud regarding a transaction log regarding a transaction between an IC card and a reader/writer is implemented.

### REFERENCE SIGNS LIST

10 IC card
11 User
20, 40 Reader/writer (R/W)
21 Shop
30, 50 Management server
100 Transaction log with card signature
101 Card signature
200 Transaction log with card signature & RW signature
201 Card signature
202 Reader/writer signature
300 Transaction log with chain signature
301 Latest transaction log
302 Card-side immediately preceding transaction corresponding card signature
303 Reader/writer-side immediately preceding transaction corresponding R/W signature
304 Card signature
305 Reader/writer signature
401, 402 IC card
411, 412 User
421, 422 Reader/writer
431, 432 Shop
501 Control unit
502, 522 Authentication processing unit
503, 528 Communication unit
504, 527 Storage unit
523 Display unit
524 Clock unit
525 Input unit (operation unit)
526 Output unit
701 CPU
702 ROM
703 RAM
704 Bus
705 Input/output interface
706 Input unit
707 Output unit
708 Storage unit
709 Communication unit
710 Drive
711 Removable medium

## Claims

1. An information processing apparatus that is a first information processing apparatus configured to execute communication with a second information processing apparatus, the information processing apparatus comprising:
a control unit configured to execute communication with the second information processing apparatus to generate a transaction log, wherein
the control unit
receives log configuration information necessary for generating the transaction log from the second information processing apparatus,
generates the transaction log, using received data, and
executes signature processing for the generated transaction log to generate a transaction log with card signature, and transmits the generated transaction log with card signature to the second information processing apparatus or a management server.

2. The information processing apparatus according to claim 1, wherein
the control unit
receives a second information processing apparatus identifier and a second information processing apparatus corresponding transaction total number from the second information processing apparatus as the log configuration information.

3. The information processing apparatus according to claim 1, wherein
the control unit
executes the signature processing for a transaction log including transaction date and time, a transaction amount, a first information processing apparatus identification number, a first information processing apparatus corresponding transaction total number, a second information processing apparatus identifier, and a second information processing apparatus corresponding transaction total number to generate a transaction log with card signature.

4. The information processing apparatus according to claim 1, wherein
the first information processing apparatus is an IC card or a portable terminal having an IC card function, and
the second information processing apparatus is a reader/writer.

5. The information processing apparatus according to claim 1, wherein
the first information processing apparatus includes
a storage unit configured to store a transaction log with card signature generated in a past, and
the control unit
transmits transaction log with card signature history data including a generated new transaction log with card signature and the past transaction log with card signature acquired from the storage unit to the second information processing apparatus or the management server.

6. An information processing system comprising: a first information processing apparatus and a second information processing apparatus, wherein
the first information processing apparatus
receives log configuration information necessary for generating a transaction log from the second information processing apparatus,
generates the transaction log, using received data, and
executes signature processing for the generated transaction log to generate a transaction log with card signature, and transmits the generated transaction log with card signature to the second information processing apparatus, and
the second information processing apparatus
executes signature processing for transaction log data included in the transaction log with card signature received from the first information processing apparatus to generate a transaction log with card signature and reader/writer signature, and transmits the transaction log with card signature and reader/writer signature to a management server.

7. The information processing system according to claim 6, wherein
the management server
executes signature verifications for a card signature and for a reader/writer signature set to the transaction log with card signature and reader/writer signature received from the second information processing apparatus, and determines that the generated transaction log is valid on condition that the two signature verifications are established.

8. The information processing system according to claim 6, wherein
the transaction log with card signature and reader/writer signature is
transaction log data including transaction date and time, a transaction amount, a first information processing apparatus identification number, a first information processing apparatus corresponding transaction total number, a second information processing apparatus identifier, and a second information processing apparatus corresponding transaction total number, and
data including a card signature by the first information processing apparatus and a reader/writer signature by the second information processing apparatus, for the transaction log.

9. The information processing system according to claim 6, wherein
the second information processing apparatus
transmits the transaction log with card signature and reader/writer signature to the first information processing apparatus, and
the first information processing apparatus
transmits transaction log with card signature and reader/writer signature history data including the transaction log with card signature and reader/writer signature received from the second information processing apparatus and a past transaction log with card signature and reader/writer signature acquired from a storage unit to the second information processing apparatus or the management server.

10. An information processing apparatus that is a first information processing apparatus configured to execute communication with a second information processing apparatus, the information processing apparatus comprising:
a control unit configured to execute communication with the second information processing apparatus to generate a transaction log, wherein
the control unit
receives log configuration information necessary for generating the transaction log from the second information processing apparatus,
generates the transaction log, using received data, and
executes new signature processing for data including the generated transaction log and signature data corresponding to an immediately preceding past transaction before the generation of the transaction log to generate a transaction log with chain signature, and transmits the generated transaction log with chain signature to the second information processing apparatus or a management server.

11. The information processing apparatus according to claim 10, wherein
the control unit
receives a second information processing apparatus-side immediately preceding transaction corresponding reader/writer signature from the second information processing apparatus, and
executes new signature processing for data including the generated transaction log, signature data of the information processing apparatus corresponding to an immediately preceding past transaction before the generation of the transaction log, and the second information processing apparatus-side immediately preceding transaction corresponding reader/writer signature to generate the transaction log with chain signature.

12. An information processing system comprising: a first information processing apparatus and a second information processing apparatus, wherein
the first information processing apparatus
receives log configuration information necessary for generating a transaction log and a second information processing apparatus-side immediately preceding transaction corresponding reader/writer signature from the second information processing apparatus, and
executes new card signature processing for following data (a) to (c):
(a) a transaction log generated using received data,
(b) a first information processing apparatus-side immediately preceding transaction corresponding card signature, and
(c) the second information processing apparatus-side immediately preceding transaction corresponding reader/writer signature,
and transmits a transaction log to which generated signature data is added to the second information processing apparatus, and
the second information processing apparatus
executes new reader/writer signature processing for the following data (a) to (c):
(a) the transaction log,
(b) the first information processing apparatus-side immediately preceding transaction corresponding card signature, and
(c) the second information processing apparatus-side immediately preceding transaction corresponding reader/writer signature
included in received data from the first information processing apparatus
to generate a transaction log with chain signature, and
transmits the generated transaction log with chain signature to a management server.

13. The information processing system according to claim 12, wherein
the first information processing apparatus and the second information processing apparatus
store a transaction log with chain signature corresponding to a past transaction in a storage unit, and
in generating a new transaction log with chain signature, acquire a signature from a transaction log with chain signature corresponding to an immediately preceding transaction stored in the storage unit, and set the acquired signature as signature target data of the new transaction log with chain signature.

14. The information processing system according to claim 12, wherein
the management server
executes signature verifications for a card signature and for a reader/writer signature included in the received transaction log with chain signature, and moreover,
executes matching processing between following signatures:
(1) a first information processing apparatus-side immediately preceding transaction corresponding card signature, and
(2) a second information processing apparatus-side immediately preceding transaction corresponding reader/writer signature
included in signature target data of the card signature and the reader/writer signature, and signatures of a past transaction log with chain signature in which the above signatures (1) and (2) are set.

15. An information processing method executed in a first information processing apparatus that executes communication with a second information processing apparatus,
the first information processing apparatus including
a control unit configured to execute the communication with the second information processing apparatus to generate a transaction log,
the information processing method comprising:
by the control unit,
receiving log configuration information necessary for generating the transaction log from the second information processing apparatus;
generating the transaction log, using received data; and
executing signature processing for the generated transaction log to generate a transaction log with card signature, and transmitting the generated transaction log with card signature to the reader/writer or a management server.

16. An information processing method executed in a first information processing apparatus that executes communication with a second information processing apparatus,
the first information processing apparatus including
a control unit configured to execute communication with the second information processing apparatus to generate a transaction log,
the information processing method comprising:
by the control unit,
receiving log configuration information necessary for generating the transaction log from the second information processing apparatus;
generating the transaction log, using received data; and
executing new signature processing for data including the generated transaction log and signature data corresponding to an immediately preceding past transaction before the generation of the transaction log to generate a transaction log with chain signature, and transmitting the generated transaction log with chain signature to the second information processing apparatus or a management server.

17. A program for causing a first information processing apparatus that executes communication with a second information processing apparatus to execute information processing,
the first information processing apparatus including
a control unit configured to execute the communication with the second information processing apparatus to generate a transaction log,
the program for causing the control unit to execute:
processing of receiving log configuration information necessary for generating the transaction log from the second information processing apparatus;
processing of generating the transaction log, using received data;
processing of executing signature processing for the generated transaction log to generate a transaction log with card signature; and
processing of transmitting the generated transaction log with card signature to the second information processing apparatus or a management server.

18. A program for causing a first information processing apparatus that executes communication with a second information processing apparatus to execute information processing,
the first information processing apparatus including
a control unit configured to execute the communication with the second information processing apparatus to generate a transaction log,
the program for causing the control unit to execute:
processing of receiving log configuration information necessary for generating the transaction log from the second information processing apparatus;
processing of generating the transaction log, using received data;
processing of executing new signature processing for data including the generated transaction log and signature data corresponding to an immediately preceding past transaction before the generation of the transaction log to generate a transaction log with chain signature; and
processing of transmitting the generated transaction log with chain signature to the second information processing apparatus or a management server.
